# EUROPÄISCHE PATENTANMELDUNG

(11) **EP 4 685 538 A2**
(43) Veröffentlichungstag der Anmeldung: **28.01.2026**
(21) Anmeldenummer: 25191243.2
(22) Anmeldetag: 23.07.2025
(51) Int. Cl.: G02B 6/44, H02G 3/04, H02G 9/06

(54) **VERBINDUNGSMUFFE, VERBINDUNGSMUFFEN-BAUGRUPPE, VERBINDUNGSKLAMMER, VERFAHREN, MIKROROHREINSATZ UND DICHTMITTEL ZUR VERBINDUNG UND/ODER REPARATUR EINES MIKROROHRS**

(30) Priorität: 25.07.2024 DE 102024121224
(71) Anmelder: gabo Systemtechnik GmbH, 94559 Niederwinkling (DE)
(72) Erfinder: Karl, Markus, 94327 Bogen (DE); Geiger, Alexander, 94559 Niederwinkling (DE)
(74) Vertreter: Schmid, Nils T.F.

(57) **Zusammenfassung**

Die vorliegende Offenbarung betrifft eine Verbindungsmuffe (300), insbesondere Halbschalenverbindungsmuffe, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: zwei Gehäusehälften,(300A,300B) insbesondere Halbschalenhülsen, die ausgestaltet sind ein Dichtmittel (200) und/oder einen Mikrorohreinsatz (100) aufzunehmen, wobei die Gehäusehälften (300A,300B) mittels einer oder mehreren Verbindungsklammern (400), insbesondere Schubklemmhülsen, insbesondere über Schwalbenschwanz-Führungen, gegeneinander verspannbar sind, wobei wenigstens eine der Gehäusehälften (300A,300B) wenigstens ein Arretierelement (350) umfasst, das eingerichtet ist, an dem, insbesondere defekten, Mikrorohr anzugreifen, insbesondere damit zu verkeilen, insbesondere zu verkrallen, insbesondere zum Sichern einer Position der Verbindungsmuffe (300) an dem, insbesondere defekten, Mikrorohr. Ferner ist ein entsprechendes Dichtmittel (200) und/oder einen Mikrorohreinsatz (100) beschrieben.

## Beschreibung

Die vorliegende Erfindung betrifft eine Verbindungsmuffe, eine Verbindungsmuffen-Baugruppe, eine Verbindungsklammer, ein Verfahren, einen Mikrorohreinsatz und ein Dichtmittel zur Verbindung und/oder Reparatur eines Mikrorohrs und/oder von Mikrorohrendstücken.

Glasfasern bestehen aus dünnen Fasern aus Glas und sind in der Lage, z.B. Lichtsignale, über große Entfernungen zu transportieren. Glasfasern können auch als Lichtwellenleiter bezeichnet werden und beispielsweise zur Datenübertragung benutzt werden.

Glasfasern werden gewöhnlich in bereits verlegte Rohre oder Rohrleitungen, z.B. eines Rohrverbands aus einer Mehrzahl von Rohren, eingebracht, z.B. eingeblasen. Diese Rohrleitungen umgeben bzw. umhüllen die Glasfasern und schützen diese, z.B. vor äußeren Einflüssen wie z.B. Feuchtigkeit, mechanischer Belastung und/oder chemischen Substanzen. Gleichzeitig dienen die Rohrleitungen als Führung für die Glasfasern. Die Rohre bestehen in der Regel aus Kunststoff.

Rohrleitungen, bzw. Mikrorohre, die Glasfasern aufgenommen haben, sind jedoch anfällig für verschiedene Arten von Beschädigungen, die die Leistung und/oder Integrität der Glasfaserkommunikation beeinträchtigen können. Beispielsweise kann eine unsachgemäße Handhabung während der Installation oder Wartung zu einer mechanischen Beanspruchung führen, bei der Schläge, Kratzer und/oder Druck zu Rissen, Öffnungen und/oder Brüchen in den Mikrorohren und/oder den Glasfasern führen können. Dies kann zu Signalverlusten oder sogar zum vollständigen Ausfall der Glasfaserkommunikation führen.

Zusätzlich können Mikrorohre empfindlich auf externe Umweltbedingungen reagieren. Temperaturschwankungen, Druck, mechanische Bewegungen, hohe Luftfeuchtigkeit, Feuchtigkeit, UV-Strahlung und/oder chemische Einflüsse können das Material der Rohre beeinträchtigen und/oder zu Verformungen, Brüchen und/oder Schwächungen führen. Dadurch können beispielsweise Öffnungen in den Mikrorohren entstehen, wodurch die darin aufgenommenen Glasfasern freigelegt werden, was sich wiederum negativ auf die Integrität der Glasfasern auswirken und die Signalübertragung beeinträchtigen kann.

Beschädigungen bzw. Materialschwächungen können ebenfalls beim Verlegen der Mikrorohre, z.B. beim Abwickeln aus dem Kabelzug und/oder beim Einziehen bzw. Einblasen von Glasfaserkabeln auftreten, beispielsweise durch übermäßige Belastung, z.B. durch Zugkräfte und/oder Biegekräfte, die letztlich zu Beschädigungen und/oder Brüchen führen können.

Diese Beschädigungen und Probleme mit den Mikrorohren können zu einer Beeinträchtigung der Signalqualität und der Datenübertragung führen. Die Reparatur bzw. der Austausch beschädigter Mikrorohre ist oft aufwendig und zeitintensiv. Beispielsweise muss bei der Reparatur darauf geachtet werden, die in den Mikrorohren verlaufenden Glasfasern nicht weiter zu beschädigen. Außerdem kann es bei der Reparatur auch notwendig sein, den laufenden Netzbetrieb bzw. die Signalübertragung zu unterbrechen, um die Reparatur durchführen zu können. Dies kann unter anderem zu erhöhten Kosten führen.

Die DE 10 2020 123 968 A1 zeigt eine Verbindungsvorrichtung für Lichtwellenleiterkabelrohre, die eine Oberseite und eine Unterseite umfasst, welche zwei Enden eines Kabelrohres aufnehmen, wobei diese mittels Schrauben und Führungsbolzen aneinander befestigt werden. Die Verwendung dieser Verbindungsvorrichtung ist jedoch recht aufwändig, da die Montage der Vorrichtung, bzw. Ober-/ und Unterseite, mittels Schrauben recht zeitintensiv ist. Die Montage der Vorrichtung ist auch hinsichtlich eines meist kleinen Verlegungsraums der Mikrorohre und/oder schwieriger Zugänglichkeit unhandlich. Auch bietet die Verwendung von Werkzeugen zur Montage der Vorrichtung eine potentielle Quelle für weitere Beschädigungen, z.B. durch unsachgemäße/fehlerhafte Handhabung der Werkzeuge.

EP 1 662 630 B1 zeigt eine weitere Verbindungsmuffe für Kabelschutzrohre.

Es ist Aufgabe der vorliegenden Erfindung, die Nachteile aus dem bekannten Stand der Technik zu überwinden und insbesondere eine verbesserte Verbindungsmuffe, Verbindungsmuffen-Baugruppe, Verbindungsklammer, ein verbessertes Verfahren, einen verbesserten Mikrorohreinsatz und ein verbessertes Dichtmittel zur Verbindung und/oder Reparatur eines Mikrorohrs und/oder von Mikrorohrendstücken, bereitzustellen.

Die Aufgabe wird durch die Merkmale der unabhängigen Ansprüche gelöst. Die abhängigen Patentansprüche beschreiben bevorzugte Ausführungsformen. Weitere Aspekte, Vorteile und Merkmale ergeben sich aus den abhängigen Ansprüchen, der Beschreibung und den begleitenden Zeichnungen.

Ein Aspekt der Erfindung betrifft einen Mikrorohreinsatz zum Verbinden von Mikrorohrendstücken eines defekten, insbesondere unterbrochenen, Mikrorohrs oder zweier verschiedener Mikrorohre, umfassend: einen im Wesentlichen länglichen Einsatzkörper zur Anordnung zwischen den Mikrorohrendstücken, wobei der im Wesentlichen längliche Einsatzkörper wenigstens eine Sollbruchstelle zum definierten Abtrennen eines Abschnitts des Einsatzkörpers umfasst, die eingerichtet ist, eine Länge des Einsatzkörpers an einen Abstand zwischen den Mikrorohrendstücken anzupassen.

Ein Aspekt der Erfindung betrifft ein Dichtmittel für eine Verbindungsmuffe, insbesondere eine Halbschalenverbindungsmuffe, zum Abdichten eines, insbesondere defekten, Mikrorohrs, insbesondere von Mikrorohrendstücken eines defekten, insbesondere unterbrochenen, Mikrorohrs oder zweier verschiedener Mikrorohre, und/oder eines Mikrorohreinsatzes insbesondere gemäß einem oder mehreren der hierin beschriebenen Erfindungsaspekte und/oder Ausführungsbeispiele, umfassend einen halbschalenförmigen Abschnitt, an dessen Enden, insbesondere dessen Umfangsenden, sich Auflagevorsprünge erstrecken, insbesondere zum Eingriff mit einer Gehäusehälfte der Verbindungsmuffe, und einen, insbesondere im Wesentlichen geradlinigen, Mikrorohr-Umhüllungsabschnitt, der an dem halbschalenförmigen Abschnitt, insbesondere an einem der Auflagevorsprünge, anschließt.

Ein Aspekt der Erfindung betrifft eine Verbindungsmuffe, insbesondere Halbschalenverbindungsmuffe, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: zwei Gehäusehälften, insbesondere Halbschalenhülsen, die ausgestaltet sind ein Dichtmittel, insbesondere gemäß einem oder mehreren der hierin beschriebenen Erfindungsaspekte und/oder Ausführungsbeispiele, und/oder einen Mikrorohreinsatz, insbesondere gemäß einem oder mehreren der hierin beschriebenen Erfindungsaspekte und/oder Ausführungsbeispiele, aufzunehmen, wobei die Gehäusehälften mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sind, wobei wenigstens eine der Gehäusehälften wenigstens ein Arretierelement umfasst, das eingerichtet ist, an dem, insbesondere defekten, Mikrorohr anzugreifen, insbesondere damit zu verkrallen, insbesondere zum Sichern einer Position der Verbindungsmuffe an dem, insbesondere defekten, Mikrorohr.

Ein Aspekt der Erfindung betrifft eine Verbindungsmuffe, insbesondere Halbschalenverbindungsmuffe, insbesondere gemäß einem oder mehreren der hierin beschriebenen Erfindungsaspekte und/oder Ausführungsbeispiele, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: zwei Gehäusehälften, insbesondere Halbschalenhülsen, die ausgestaltet sind ein Dichtmittel, insbesondere gemäß einem oder mehreren der hierin beschriebenen Erfindungsaspekte und/oder Ausführungsbeispiele und/oder einen Mikrorohreinsatz, insbesondere gemäß einem oder mehreren der hierin beschriebenen Erfindungsaspekte und/oder Ausführungsbeispiele, aufzunehmen, wobei die Gehäusehälften mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, über Schwalbenschwanz-Führungen gegeneinander verspannbar sind; wobei ein Winkel, insbesondere ein Keilwinkel, der Schwalbenschwanz-Führungen weniger als in etwa 3°, insbesondere weniger als in etwa 2°, vorzugsweise 1,5° beträgt.

Ein Aspekt der Erfindung betrifft eine Verbindungsmuffe, insbesondere Halbschalenverbindungsmuffe, insbesondere gemäß einem oder mehreren der hierin beschriebenen Erfindungsaspekte und/oder Ausführungsbeispiele, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: zwei Gehäusehälften, insbesondere Halbschalenhülsen, die ausgestaltet sind ein Dichtmittel, insbesondere gemäß einem oder mehreren der hierin beschriebenen Erfindungsaspekte und/oder Ausführungsbeispiele und/oder einen Mikrorohreinsatz, insbesondere gemäß einem oder mehreren der hierin beschriebenen Erfindungsaspekte und/oder Ausführungsbeispiele, aufzunehmen, wobei die Gehäusehälften mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sind; wobei wenigstens eine der Gehäusehälften, insbesondere der Halbschalenhülsen, auf einer Außenseite der wenigstens einen Gehäusehälfte, wenigstens eine Vertiefung, insbesondere eine Vertiefungsrippe, aufweist.

Ein Aspekt der Erfindung betrifft eine Verbindungsmuffe, insbesondere Halbschalenverbindungsmuffe, insbesondere gemäß einem oder mehreren der hierin beschriebenen Erfindungsaspekte und/oder Ausführungsbeispiele, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: zwei Gehäusehälften, insbesondere Halbschalenhülsen, die ausgestaltet sind ein Dichtmittel, insbesondere gemäß einem oder mehreren der hierin beschriebenen Erfindungsaspekte und/oder Ausführungsbeispiele und/oder einen Mikrorohreinsatz, insbesondere gemäß einem oder mehreren der hierin beschriebenen Erfindungsaspekte und/oder Ausführungsbeispiele, aufzunehmen, wobei die Gehäusehälften mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sind, wobei wenigstens eine der Gehäusehälften einen Querschnitt aufweist, der sich in Längsrichtung der wenigstens einen Gehäusehälfte ändert.

Ein Aspekt der Erfindung betrifft eine Verbindungsklammer, insbesondere eine Schubklemmhülse, insbesondere zum Verspannen von Gehäusehälften einer Verbindungsmuffe, insbesondere Halbschalenverbindungsmuffe, gemäß einem oder mehreren der hierin beschriebenen Erfindungsaspekte und/oder Ausführungsbeispiele, umfassend: einen im Wesentlichen länglichen Klemmkörper, wobei der im Wesentlichen länglichen Klemmkörper eine Breite aufweist, die sich, insbesondere in dessen Längsrichtung, ändert.

Ein Aspekt der Erfindung betrifft eine Verbindungsklammer, insbesondere eine Schubklemmhülse, insbesondere gemäß einem oder mehreren der hierin beschriebenen Erfindungsaspekte und/oder Ausführungsbeispiele, insbesondere zum Verspannen von Gehäusehälften einer Verbindungsmuffe, insbesondere Halbschalenverbindungsmuffe, insbesondere gemäß einem oder mehreren der hierin beschriebenen Erfindungsaspekte und/oder Ausführungsbeispiele, umfassend: einen im Wesentlichen länglichen Klemmkörper, wobei der im Wesentlichen längliche Klemmkörper, insbesondere auf einer Außenseite, wenigstens einen Vorsprung, insbesondere wenigstens eine Rippe aufweist, insbesondere zum Anbringen der Verbindungsklammer, insbesondere der Schubklemmhülse, an den Gehäusehälften.

Ein Aspekt der Erfindung betrifft eine Verbindungsmuffen-Baugruppe, insbesondere Reparatur-Kit, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: eine Verbindungsmuffe mit zwei Gehäusehälften gemäß einem oder mehreren der hierin beschriebenen Erfindungsaspekte und/oder Ausführungsbeispiele, die mittels einer oder mehrere Verbindungsklammern, insbesondere einer Schubklemmhülsen, gemäß einem oder mehreren der hierin beschriebenen Erfindungsaspekte und/oder Ausführungsbeispiele, verspannbar sind; einen Mikrorohreinsatz gemäß einem oder mehreren der hierin beschriebenen Erfindungsaspekte und/oder Ausführungsbeispiele, und/oder ein Dichtmittel gemäß einem oder mehreren der hierin beschriebenen Erfindungsaspekte und/oder Ausführungsbeispiele, die zwischen den Gehäusehälften einschließbar sind, insbesondere kraftschlüssig und/oder formschlüssig.

Ein Aspekt der Erfindung betrifft ein Verfahren zur Reparatur eines, insbesondere defekten, Mikrorohrs und/oder zum Verbinden von Mikrorohrendstücken eines defekten, insbesondere unterbrochenen, Mikrorohrs oder zweier verschiedener Mikrorohre, mittels
- einem Mikrorohreinsatz gemäß einem oder mehreren der hierin beschriebenen Erfindungsaspekte und/oder Ausführungsbeispiele; und/oder
- einem Dichtmittel gemäß einem oder mehreren der hierin beschriebenen Erfindungsaspekte und/oder Ausführungsbeispiele; und/oder
- einer Verbindungsmuffe gemäß einem oder mehreren der hierin beschriebenen Erfindungsaspekte und/oder Ausführungsbeispiele; und/oder
- einer oder mehrere Verbindungsklammern, insbesondere Schubklemmhülsen, gemäß einem oder mehreren der hierin beschriebenen Erfindungsaspekte und/oder Ausführungsbeispiele; und/oder
- einer Verbindungsmuffen-Baugruppe gemäß einem oder mehreren der hierin beschriebenen Erfindungsaspekte und/oder Ausführungsbeispiele.

Ein Aspekt der Erfindung betrifft eine Verwendung eines Mikrorohreinsatzes gemäß einem oder mehreren der hierin beschriebenen Erfindungsaspekte und/oder Ausführungsbeispiele, eines Dichtmittels gemäß einem oder mehreren der hierin beschriebenen Erfindungsaspekte und/oder Ausführungsbeispiele, einer Verbindungsmuffe gemäß einem oder mehreren der hierin beschriebenen Erfindungsaspekte und/oder Ausführungsbeispiele, einer oder mehrerer Verbindungsklammern, insbesondere Schubklemmhülsen, gemäß einem oder mehreren der hierin beschriebenen Erfindungsaspekte und/oder Ausführungsbeispiele, einer Verbindungsmuffen-Baugruppe gemäß einem oder mehreren der hierin beschriebenen Erfindungsaspekte und/oder Ausführungsbeispiele und/oder einem Verfahren gemäß einem oder mehreren der hierin beschriebenen Erfindungsaspekte und/oder Ausführungsbeispiele,
- zur Reparatur eines, insbesondere defekten, Mikrorohrs, und/oder
- zum Verbinden von Mikrorohrendstücken eines defekten, insbesondere unterbrochenen, Mikrorohrs oder zweier verschiedener Mikrorohre,
während eines laufenden Netzbetriebs.

Wenn hierin Bezug auf einen Mikrorohreinsatz, ein Dichtmittel, eine Verbindungsmuffe, eine Verbindungsklammer, eine Verbindungsmuffen-Baugruppe, ein Verfahren oder eine Verwendung genommen wird, ist damit der erfindungsgemäße Mikrorohreinsatz, das erfindungsgemäße Dichtmittel, die erfindungsgemäße Verbindungsmuffe, die erfindungsgemäße Verbindungsklammer, die erfindungsgemäße Verbindungsmuffen-Baugruppe, das erfindungsgemäße Verfahren oder die erfindungsgemäße Verwendung gemeint.

Die vorliegende Erfindung eignet sich zum Verbinden und/oder Reparieren eines insbesondere defekten, Mikrorohrs, insbesondere von Mikrorohrendstücken eines defekten, insbesondere unterbrochenen, Mikrorohrs oder zweier verschiedener Mikrorohre. Es sei klar, dass ich Ausführungen des insbesondere defekten, Mikrorohrs gleichermaßen auf die Mikrorohrendstücke eines defekten, insbesondere unterbrochenen, Mikrorohrs oder zweier verschiedener Mikrorohre beziehen können und umgekehrt. "Mikrorohrendstücke" können hierin Endstücke eines defekten, insbesondere unterbrochenen, Mikrorohrs, z.B. eines einzigen, oder zweier verschiedener Mikrorohre bezeichnen.

Ein defektes Mikrorohr kann ein Mikrorohr sein, das in irgendeiner Weise beeinträchtigt, beschädigt und/oder kaputt ist, beispielsweise strukturell und/oder funktionell, z.B. durch physische Beeinträchtigungen wie Risse, Löcher, Brüche, und/oder Verformungen, Unterbrechungen, z.B. dass dessen Kontinuität entlang seiner Länge unterbrochen ist, Materialfehler, Verunreinigungen und/oder andere Ursachen die beispielsweise zu verschlechterten Eigenschaften, wie z.B. optischen und/oder strukturellen Eigenschaften, die zu einer verschlechterten Funktionalität, Datenverlusten und/oder einer gestörten Signalübertragung bzw. verminderter Leistung führen können.

Erfindungsgemäße Gegenstände, z.B. Mikrorohreinsätze, Verbindungsmuffen, Verbindungsmuffen-Baugruppen und/oder Dichtmittel, können beispielsweise direkt über ein, insbesondere defektes, Mikrorohr gelegt werden, um eine Verbindung bereitzustellen bzw. den defekt zu beheben.

Alternativ oder zusätzlich kann die Beschädigung in dem, insbesondere defekten, Mikrorohr beispielsweise entfernt werden, indem, z.B. ein Bereich um die Beschädigung herum, z.B. über eine bestimmte Länge, ausgeschnitten wird. Daraus kann sich ein, insbesondere definierter bzw. einstellbarer, Abstand zwischen den verbleibenden Endstücken, insbesondere den Mikrorohrendstücken, des, insbesondere defekten, Mikrorohrs, ergeben. Das, insbesondere defekte, Mikrorohr, kann also durch den Abstand unterbrochen sein, wobei die Glasfasern weiterhin zwischen den Mikrorohrendstücken verlaufen können. Dieser Abstand kann beispielsweise abhängig von der Art und/oder Größe der Beschädigung ergeben und/oder frei gewählt werden. Gleichermaßen ist es möglich, dass Mikrorohrendstücke zweier verschiedener Mikrorohre verbunden werden, beispielsweise um ein Mikrorohr zu verlängern und/oder verschiedene Mikrorohre miteinander zu verbinden.

Ein "Mikrorohreinsatz" kann als Einlage, Abstandshalter, Zwischenstück, Verbindungsstück, und/oder Einsatz verstanden werden, der sich für, insbesondere defekte, Mikrorohre und/oder Mikrorohrendstücke eines defekten, insbesondere unterbrochenen, Mikrorohrs oder zweier verschiedener Mikrorohre, die beispielsweise Glasfasern aufgenommen haben, eignet. Beispielsweise kann mittels eines Mikrorohreinsatz der Abstand zwischen Mikrorohrendstücken überbrückt und/oder wiederhergestellt werden. Beispielsweise ist der Mikrorohreinsatz zur Anlage mit den Mikrorohrendstücken eingerichtet, bzw. zum Eingriff damit, um diese miteinander zu verbinden, z.B. kann der Mikrorohreinsatz die Mikrorohrendstücke, insbesondere direkt, kontaktieren und/oder daran anschließen.

Der Mikrorohreinsatz gemäß der Erfindung ist wenigstens für den oben genannten Abstand zwischen Mikrorohrendstücken ausgestaltet und/oder eingerichtet, beispielsweise diesen zu überbrücken und/oder eine Verbindung zwischen den verbleibenden Endstücken herzustellen. Gleichermaßen ist es möglich, dass Mikrorohrendstücke zweier verschiedener Mikrorohre mit dem Mikrorohreinsatz verbunden werden, beispielsweise um ein Mikrorohr zu verlängern und/oder verschiedene Mikrorohre miteinander zu verbinden.

Der Mikrorohreinsatz kann einen im Wesentlichen länglichen Einsatzkörper aufweisen, der beispielsweise die Hauptkomponente des Einsatzes darstellen kann.

"Im Wesentlichen länglich" kann hierin insbesondere bedeuten, dass ein Körper, z.B. der Einsatzkörper, beispielsweise in axialer oder Längs-Richtung des, insbesondere defekten, Mikrorohres, eine größere Abmessung aufweist als in radialer Richtung, d.h. er ist eher lang bzw. länglich als breit oder hoch.

Eine Länge des Einsatzkörpers kann beispielsweise vordefiniert sein und in einem Bereich von in etwa 15 bis in etwa 25 cm , vorzugsweise in etwa 18 cm bis in etwa 22 cm liegen, insbesondere in etwa 20 cm aufweisen.

Der im Wesentlichen längliche Einsatzkörper kann zylinderförmig, beispielsweise hohl-zylinderförmig, und/oder rohrförmig ausgebildet sein, insbesondere aus zwei Halbschalen. Die Halbschalen können einen runden Querschnitt aufweisen. Insbesondere können die zwei Halbschalen eingerichtet sein, zwischen den Mikrorohrendstücken verlaufende Glasfasern, einzuschließen, insbesondere zu umhüllen, insbesondere formschlüssig und/oder kraftschlüssig. Eine von einem runden Querschnitt abweichende Form ist ebenfalls denkbar, beispielsweise eckig, z.B. solange der Einsatzkörper in der Lage ist, die Glasfasern zu umgeben. Der im Wesentlichen längliche Einsatzkörper kann aus einem Polymer, beispielsweise Polyethylen, hergestellt sein.

Die Halbschalen können einen Wandstärke bzw. Nennwandstärke aufweisen, die im Wesentlichen einer Wandstärke bzw. Nennwandstärke eines Mikrorohrs entspricht. Die Halbschalen können einen Außendurchmesser aufweisen, der im Wesentlichen einem Außendurchmesser des Mikrorohrs entspricht. Beispielhafte Werte, jedoch nicht als einschränkend zu verstehende Werte, sind der folgenden Tabelle zu entnehmen:

| Nenn-Außendurchme sser Mikrorohr [cm] | Nenn-Wandstärk e Mikrorohr [cm] | min. Außendurchm esser Mikrorohr [cm] | max. Außendurchm esser Mikrorohr [cm] | min. Wandstärk e Mikrorohr [cm] | max. Wandstärke Mikrorohr [cm] |
|---|---|---|---|---|---|
| 4 | 0,75 | 4,0 | 4,1 | 0,75 | 0,85 |
| 5 | 0,75 | 5,0 | 5,2 | 0,75 | 0,95 |
| 7 | 0,75 | 7,0 | 7,1 | 0,75 | 0,85 |
| 7 | 1,5 | 7,0 | 7,1 | 1,5 | 1,6 |
| 7 | 1,75 | 7,0 | 7,1 | 1,7 | 1,85 |
| 8 | 2,0 | 8,0 | 8,1 | 2,0 | 2,1 |
| 10 | 1,0 | 10,0 | 10,1 | 1,0 | 1,1 |
| 10 | 2,0 | 10,0 | 10,1 | 2,0 | 2,1 |
| 12 | 1,1 | 12,0 | 12,1 | 1,1 | 1,2 |
| 12 | 2,0 | 12,0 | 12,1 | 2,0 | 2,1 |
| 14 | 1,3 | 14,0 | 14,1 | 1,3 | 1,4 |
| 14 | 1,5 | 14,0 | 14,1 | 1,5 | 1,65 |
| 14 | 2,0 | 14,0 | 14,1 | 2,0 | 2,1 |
| 16 | 1,5 | 16,0 | 16,15 | 1,5 | 1,6 |
| 16 | 2,0 | 16,0 | 16,15 | 2,0 | 2,1 |
| 16 | 3,0 | 16,0 | 16,15 | 3,0 | 3,1 |
| 18 | 1,5 | 18,0 | 18,15 | 1,5 | 1,6 |
| 18 | 2,0 | 17,9 | 18,1 | 1,9 | 2,1 |
| 20 | 2,0 | 20,0 | 20,2 | 2,0 | 2,15 |
| 20 | 2,5 | 20,0 | 20,15 | 2,5 | 2,6 |
| 25 | 2,0 | 25,0 | 25,15 | 2,0 | 2,15 |
| 25 | 2,5 | 25,0 | 25,15 | 2,5 | 2,65 |

Der Mikroeinsatz kann eine Mehrzahl von Sollbruchstellen umfassen. Eine "Sollbruchstelle" kann eine, insbesondere absichtlich, eingefügte Schwachstelle in dem Einsatzkörper sein, um ein gezieltes und/oder definiertes Brechen, Reißen, Trennen und/oder Abtrennen zu ermöglichen, beispielsweise um eine bestimmte Länge des Einsatzkörpers einzustellen, zu kontrollieren und/oder zu steuern bzw. die Länge des Einsatzkörpers anzupassen. Die Sollbruchstell kann ermöglichen, dass der Einsatzkörper gezielt und/oder definiert an einen Abstand zwischen den Mikrorohrendstücken anpassbar ist. Eine Sollbruchstelle kann eine Perforation und/oder eine Abrisskante sein. Beispielsweise kann durch eine gezielte Veränderung der Materialdicke, -dichte und/oder -struktur an einer bestimmten Stelle und/oder in einem bestimmten Bereich, z.B. einer Außenfläche, eine Sollbruchstelle geschaffen werden, die es ermöglicht, das Material präzise zu trennen, z.B. wenn eine gewünschte Belastung bzw. Kraft aufgebracht wird. Die Sollbruchstelle kann beispielsweise durch Bereiche geringerer Dicke und/oder Materialschwächungen erreicht werden. Beispielsweise kann ein Material des Einsatzkörpers an einer bestimmten Stelle bzw. in einem bestimmten Bereich dünner ausgestaltet sein, als z.B. der restliche Einsatzkörper. Auch kann der Einsatzkörper durch Schwächungen wie Perforationen, Kerben oder verringerte Materialdichte gezielt geschwächt werden, um eine Schwachstelle zu erzeugen, die bei gezielter Belastung oder Beanspruchung leichter bricht, oder reißt bzw. sich einfacher abtrennen lässt. Mehrere Sollbruchstellen können unterschiedliche Abstände zueinander aufweisen. Die Sollbruchstellen können gleichmäßig beabstandet sein, insbesondere mit einem Abstand in einem Bereich von in etwa 10 mm bis 30 mm, insbesondere in etwa 15 mm bis 25 mm, vorzugsweise in etwa 18 mm bis 22 mm, am bevorzugtesten in etwa 20 mm; beispielsweise können die Abstände in etwa 19,5 mm bzw. 19, 75 mm betragen.

Ein Dichtmittel gemäß der Erfindung kann zum Abdichten eines, insbesondere defekten, Mikrorohrs, insbesondere von Mikrorohrendstücken eines defekten, insbesondere unterbrochenen, Mikrorohrs oder zweier verschiedener Mikrorohre, und/oder gemäß einem oder mehreren der hierin beschriebenen Erfindungsaspekte und/oder Ausführungsbeispiele, eingerichtet sein. Ferner kann das Dichtmittel innerhalb einer Verbindungsmuffe angeordnet werden. Das Dichtmittel kann eine Abdichtung, eine Barriere und/oder einen Schutz für die und zwischen den Mikrorohren bzw. Mikrorohrendstücken eines defekten, insbesondere unterbrochenen, Mikrorohrs oder zweier verschiedener Mikrorohre (und ggf. für dein Mikrorohreinsatz) bereitstellen, beispielsweise um zu verhindern, dass Feuchtigkeit bzw. Flüssigkeiten, Gase entweichen und/oder eindringen können. Das Dichtmittel kann eingerichtet sein, das, insbesondere defekte, Mikrorohr gas- und/oder wasserdicht abzudichten. Das Dichtmittel kann auch vor Staub bzw. Schmutz, vor Chemikalien und/oder anderen Materialien/Stoffen und/oder Einflüssen schützen, welche die Struktur und/oder die Funktion des Mikrorohres negativ beeinflussen können. Das Dichtmittel kann aus verschiedenen Materialien hergestellt sein, beispielsweise eines oder mehrere von: Kunststoff, einem Elastomer-Material, Gummi, flexible Polymere, Epoxidharz, Polyurethan, und/oder thermoplastische Elastomere.

Das erfindungsgemäße Dichtmittel kann eine spezifische Form und/oder Geometrie aufweisen. Beispielsweise kann das Dichtmittel einen halbschalenförmigen Abschnitt aufweisen, an dessen Enden, insbesondere dessen Umfangsenden, sich Auflagevorsprünge erstrecken, insbesondere zum Eingriff mit einer Gehäusehälfte der Verbindungsmuffe und einen, insbesondere im Wesentlichen geradlinigen, Mikrorohr-Umhüllungsabschnitt, der an dem halbschalenförmigen Abschnitt, insbesondere an einem der Auflagevorsprünge, anschließt.

Es sei klar, dass die hierin angegebenen Abmessungen, z.B. Längen-, Breiten-, Höhen-, Tiefen und/oder Dickenabmessungen lediglich beispielhaft sind und insbesondere von den Abmessungen bzw. den Dimensionen des, insbesondere defekten, Mikrorohrs bzw. der Mikrorohrendstücke, beispielsweise von dessen/deren Durchmesser abhängen können.

Das Dichtmittel kann beispielsweise in axialer Richtung bzw. Längsrichtung des, insbesondere defekten, Mikrorohrs z.B. im Wesentlichen länglich ausgestaltet sein. Eine Länge des Dichtmittels, insbesondere in Längsrichtung des, insbesondere defekten, Mikrorohrs, kann im Wesentlichen einer Länge der Verbindungsmuffe entsprechen. Das Dichtmittel kann eingerichtet sein, das, insbesondere defekte, Mikrorohr und/oder die Mikrorohrendstücke, wenigstens abschnittsweise, z.B. in Längsrichtung des, insbesondere defekten, Mikrorohrs, im Wesentlichen vollständig zu umhüllen, insbesondere umfänglich und/oder radial.

Die Auflagevorsprünge können sich beispielsweise in radialer Richtung des Dichtmittels bzw. des, insbesondere defekten, Mikrorohrs erstrecken, z.B. quer zur Längsrichtung des, insbesondere defekten, Mikrorohrs. Beispielsweise können die Auflagevorsprünge eine Breite in einem Bereich von in etwa 2-7 mm, vorzugsweise 3-6 mm, besonderes bevorzugt in etwa 3,5-5,5 mm aufweisen, beispielsweise in etwa 4 mm. Die Auflagevorsprünge können sich entlang der Längsrichtung des, insbesondere defekten, Mikrorohrs, im Wesentlichen über die gesamte Länge des Dichtelements und/oder der Verbindungsmuffe erstrecken. Der halbschalenförmige Abschnitt kann mit dem Mikrorohr-Umhüllungsabschnitt, insbesondere fest, vorzugsweise stoffschlüssig, verbunden sein. Vorzugsweise sind der halbschalenförmige Abschnitt und der Mikrorohr-Umhüllungsabschnitt aus einem Stück ausgebildet, d.h. einstückig.

Das Dichtmittel kann einen im Wesentlichen J-förmigen Querschnitt aufweisen. Beispielsweise kann der Mikrorohr-Umhüllungsabschnitt den geraden Abschnitt des "J" darstellen, der in den gekrümmten/gebogenen Abschnitt mündet, der durch den halbschalenförmigen Abschnitt des Dichtmittels gebildet sein kann. Der Mikrorohr-Umhüllungsabschnitt kann eine Länge aufweisen, die so dimensioniert ist, dass sie wenigstens den Abschnitt des Mikrorohrs bedecken kann, insbesondere vollständig, der nicht (bereits) von dem halbschalenförmigen Abschnitt bedeckt wird. Beispielsweise kann eine Länge des, insbesondere im Wesentlichen geradlinigen, Mikrorohr-Umhüllungsabschnitts auf einen Umfang, insbesondere eine Umfangslänge, des, insbesondere defekten, Mikrorohrs, bzw. der Mikrorohrendstücke, abgestimmt sein. Die Länge des, insbesondere im Wesentlichen geradlinigen, Mikrorohr-Umhüllungsabschnitts kann auch auf einen Durchmesser des insbesondere defekten, Mikrorohrs, bzw. der Mikrorohrendstücke, abgestimmt sein (hierzu sei auf obige Tabelle verwiesen).

Die Auflagevorsprünge können eine unterschiedliche und/oder variierende Dicke aufweisen, insbesondere kann eine Dicke der Auflagevorsprünge, insbesondre in der Längsrichtung des, insbesondere defekten, Mikrorohrs wenigstens abschnittsweise variieren, beispielsweise schrittweise und/oder stufenweise. Auch eine allmähliche bzw. kontinuierliche Dickenänderung ist denkbar. Beispielsweise kann eine Dicke der Auflagevorsprünge in Endbereichen des Dichtmittels größer sein, als eine Dicke der Auflagevorsprünge zwischen den Endbereichen des Dichtmittels. Eine Dicke der Auflagevorsprünge in den Endbereichen des Dichtmittels kann beispielsweise in etwa wenigstens doppelt so groß oder in etwa dreimal so groß sein, wie eine Dicke der Auflagevorsprünge zwischen den Endbereichen. Beispielsweise kann die Dicke D der Auflagevorsprünge 202A, 202B in den Endbereichen 202A', 202B' in etwa 3 mm betragen, während die Dicke D' der der Auflagevorsprünge 202A, 202B zwischen den Endbereichen 202A', 202B' beispielsweise in etwa 1 mm betragen kann. Eine Länge der Endbereiche, in denen die Dicke der Auflagesprünge erhöht ist, kann beispielsweise in einem Bereich von in etwa 2-7 cm, vorzugsweise 3-6 cm, am bevorzugtesten 4-5 cm betragen, beispielsweise in etwa 4,5 cm. Andere Längen/Dicken sind ebenfalls möglich, beispielsweise größere/kleinere.

Alternativ oder zusätzlich können die Auflagevorsprünge eine spezifische Form und/oder einen spezifischen Querschnitt aufweisen, beispielsweise eine Pfeilform, die eingerichtet ist, mit wenigstens einer Vertiefung, beispielsweise einer Nut, in einer Gehäusehälfte einzugreifen, insbesondere damit zu verkeilen und/oder zu verhaken. Die spezifische Form bzw. die variierende Dicke der Auflagevorsprünge kann für eine zusätzliche Fixierung und/oder mehr Halt sorgen, beispielsweise in Kombination mit einen Anpressdruck, der durch die Verbindungsmuffe erzeugt werden kann, was die Dichtigkeit des Dichtmittels innerhalb der Verbindungsmuffe verbessern kann.

An einem Ende des, insbesondere im Wesentlichen geradlinigen, Mikrorohr-Umhüllungsabschnitts kann wenigstens ein Vorsprung, insbesondere ein Mitnehmervorsprung, ausgebildet sein, insbesondere zum Eingriff, insbesondere zum Einhaken, Greifen, und/oder Einrasten, mit einer anderen Gehäusehälfte der Verbindungsmuffe. Der Mitnehmervorsprung kann im Wesentlichen die gleiche Breite aufweisen, wie die Breite der Auflagevorsprünge und/oder sich radial nach außen erstrecken. Der Mitnehmervorsprung kann wenigstens so bemessen sein, dass er eingerichtet ist, an einer Gehäusehälfte einzuhaken und eine Kraft, ein Drehmoment und/oder eine Bewegung der Verbindungsmuffe, beispielsweise bei der Montage, insbesondere beim Zusammenklappen der Gehäusehälften, insbesondere beim Einschließen des Dichtmittels, auf den Mikrorohr-Umhüllungsabschnitt zu übertragen, um den Mikrorohr-Umhüllungsabschnitt an dem, insbesondere defekten, Mikrorohr zu befestigen, zu halten, anzubringen und/oder anzulegen. Wie bereits ausgeführt, kann eine Länge des, insbesondere im Wesentlichen geradlinigen, Mikrorohr-Umhüllungsabschnitts auf einen Umfang, insbesondere eine Umfangslänge, des, insbesondere defekten, Mikrorohrs bzw. der Mikrorohrendstücke, abgestimmt ist. Dies kann derart vorgesehen sein, um, z.B. in einem verbauten Zustand, einen Eingriff zwischen dem wenigstens einen Vorsprung, insbesondere dem Mitnehmervorsprung, des, insbesondere im Wesentlichen geradlinigen, Mikrorohr-Umhüllungsabschnitts, mit einem anderen der Auflagevorsprünge des halbschalenförmigen Abschnitts, zu ermöglichen. Beispielsweise kann in einem montierten Zustand der Mitnehmervorsprung an wenigstens einem der Auflagevorsprünge, insbesondere dichtend, anliegen. Dies kann die Dichtigkeit des Dichtmittels innerhalb der Verbindungsmuffe weiter verbessern, da Mitnehmervorsprung und Auflagevorsprung durch eine Anpresskraft, beispielsweise durch die Verbindungsmuffe, für eine erhöhte Dichtheit sorgen.

Der halbschalenförmige Abschnitt und/oder der, insbesondere im Wesentlichen geradlinige, Mikrorohr-Umhüllungsabschnitt, kann eine strukturierte Oberfläche, insbesondere auf einer dem, insbesondere defekten, Mikrorohr zugewandten bzw. zuzuwendenden Seite, vorzugsweise einer Innenseite, aufweisen. Beispielsweise kann die strukturierte Oberfläche wenigstens eine Erhebung, insbesondere wenigstens eine Rille oder Rippe, vorzugsweise eine Arretier-Rippe, aufweisen, die eingerichtet ist, an wenigstens einem der Mikrorohrendstücke des, insbesondere defekten, Mikrorohrs, anzugreifen, insbesondere um eine Position des Dichtmittels zu fixieren. Bevorzugt können mehrere Arretier-Rippen vorhanden sein, die vorzugsweise im Wesentlichen gleichmäßig über die Länge des Dichtmittels angeordnet bzw. verteilt sind. Beispielhafte Abstände können in einem Bereich von in etwa 3-6 mm, beispielsweise in etwa 4-4,8 mm, insbesondere in etwa 4 mm (z.B. ein erster Abstand) bzw. in etwa 4,4 mm (z.B. ein zweiter Abstand) liegen, oder mehr bzw. weniger. Die Rippen können eine beispielhafte Dicke d von in etwa 1 mm aufweisen, wobei auch andere Dicken d denkbar sind. Eine Höhe der Erhebung kann so dimensioniert sein, um wenigstens mit wenigstens einem Mikrorohrendstück eingreifen zu können. Die Erhebungen, beispielsweise die Rippen können eine Höhe in einem Bereich von in etwa 0,1 mm bis in etwa 0,4 mm, insbesondere in etwa 0,2 mm (z.B. eine erste Höhe) bis in etwa 0,35 mm (z.B. eine zweite Höhe) aufweisen. Es ist denkbar, dass die Erhebungen, unterschiedliche Abstände A1/A2, Dicken d und/oder Höhen h1/h2 aufweisen. Auch kann eine erste Erhebung einen anderen Abstand A1/A2, Dicke d und/oder Höhe h1/h2 aufweisen als eine zweite (und/oder dritte) Erhebung. Auch verschiedene Kombinationen der zuvor genannten sind denkbar. Es können auch alle Erhebungen die im Wesentlichen gleichen Abstände, Dicken und/oder Höhen aufweisen. Alternativ oder zusätzlich sind auch unterschiedliche Abstände und/oder nicht geradlinig verlaufende, beispielsweise schräge, Erhebungen denkbar, beispielsweise abhängig von der Form/Geometrie der Mikrorohrendstücke. Die strukturierte Oberfläche kann die Position des Dichtmittels an dem, insbesondere defekten, Mikrorohr sichern und z.B. gegen Verschiebungen, Stöße und/oder andere Einflüsse sichern, was die Zuverlässigkeit verbessern kann. Die strukturierte Oberfläche und/oder die wenigstens eine Erhebung kann sich wenigstens abschnittsweise, vorzugsweise komplett, über eine Breite und/oder Länge der dem, insbesondere defekten, Mikrorohr zugewandten bzw. zuzuwendenden Seite, insbesondere der Innenseite des halbschalenförmigen Abschnitts und/oder des, insbesondere im Wesentlichen geradlinigen, Mikrorohr-Umhüllungsabschnitts erstrecken.

Gemäß einem Aspekt der Erfindung ist eine Verbindungsmuffe, insbesondere Halbschalenverbindungsmuffe, für ein, insbesondere defektes, Mikrorohr, bereitgestellt, die eingerichtet sein kann zum Verbinden von Mikrorohrendstücken eines defekten, insbesondere unterbrochenen, Mikrorohrs oder zweier verschiedener Mikrorohre. Mittels der erfindungsgemäßen Verbindungsmuffe können, insbesondere defekte, Mikrorohre repariert werden. Die Verbindungsmuffe kann zwei Gehäusehälften umfassen, insbesondere zwei Halbschalenhülsen, die, in einem montierten Zustand aneinander anliegen und/oder aufeinandergesetzt sind. Die Verbindungsmuffe kann im montierten Zustand im Wesentlichen zylinderförmig, beispielsweise hohl-zylinderförmig, und/oder im Wesentlichen rohrförmig ausgebildet sein. Die zwei Gehäusehälften, insbesondere Halbschalenhülsen, können ausgestaltet sein ein Dichtmittel, insbesondere gemäß einem oder mehreren der hierin beschriebenen Erfindungsaspekte und/oder Ausführungsbeispiele, und/oder einen Mikrorohreinsatz, gemäß einem oder mehreren der hierin beschriebenen Erfindungsaspekte und/oder Ausführungsbeispiele, aufzunehmen und/oder darin einzuschließen. Es sei klar, dass auch das, insbesondere defekte, Mikrorohr bzw. die Mikrorohrendstücke in der Verbindungsmuffe aufgenommen werden.

Die Gehäusehälften können mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sein. Die eine oder mehrerer Verbindungsklammern können beispielsweise auf die Führung geschoben werden, um die Gehäusehälften zu verspannen.

Beispielsweise kann die Verbindungsmuffe und/oder die Gehäusehälften, insbesondere an einer Außenseite, eine oder mehrere Leisten, insbesondere Führungsleisten, vorzugsweise für die hierin beschriebenen Verbindungsklammern, insbesondere die Schubklemmhülsen, aufweisen und/oder ausbilden. Die eine oder die mehreren Leisten können z.B. geneigt sein, insbesondere im Wesentlichen keilförmig, insbesondere schwalbenschwanzförmig, verlaufen, beispielsweise in Längsrichtung der Verbindungsmuffe und/oder der Gehäusehälfte. Beispielsweise können sich die eine oder die mehreren Leisten von einem Mittelpunkt der Verbindungsmuffe und/oder der Gehäusehälfte in Richtung der Endbereiche der Verbindungsmuffe verjüngen. Vorzugsweise sind die Leisten an der Außenseite des Verbindungsmuffe und/oder der Gehäusehälfte vorgesehen, insbesondere an gegenüberliegenden Außenseiten, der Verbindungsmuffe, die vorzugsweise im Wesentlichen identisch ausgestaltet sein können. Die Leisten können durch die beiden Gehäusehälften ausgebildet sein. Beispielsweise kann eine Gehäusehälfte einen Teil der Leiste, z.B. die eine Hälfte der Leiste, ausbilden und eine andere Gehäusehälfte den anderen Teil, z.B. die andere Hälfte der Leiste, ausbilden. Durch Montage der Gehäusehälften, insbesondere wenn diese aufeinandergesetzt werden, kann sich die endgültige Leiste ergeben, die mit einer Verbindungsklammer, insbesondere einer darin formkomplementär vorgesehenen Ausnehmung, insbesondere eine Nut, die ebenfalls im Wesentlichen keilförmig, insbesondere schwalbenschwanzförmig, ausgestaltet ist, eingreifen kann, um die Gehäusehälften der Verbindungsmuffe zu verspannen, insbesondere aneinander zu befestigen, vorzugsweise form- und/oder kraftschlüssig.

Die Gehäusehälften, insbesondere Halbschalenhülsen, können aus einem Material hergestellt sein, dass eine Dichte von in etwa 1,07 g/m³, ein Elastizitätsmodul (E-Modul) von in etwa 1950 Mpa und/oder eine Zugfestigkeit von in etwa 1900 MPa aufweisen kann. Die Gehäusehälften können, insbesondere in einem montierten Zustand, z.B. wenn die beiden Gehäusehälften aufeinander liegen, bzw. aufeinandergesetzt sind, einen Aufnahmebereich aufweisen, definieren und/oder ausbilden, insbesondere eine Durchgangsöffnung, zur Aufnahme des, insbesondere defekten, Mikrorohrs bzw. von Mikrorohrendstücken. Beispielsweise kann in jeder Gehäusehälfte eine halbzylinderförmige, halbschalenförmige und/oder halbrohrförmige Vertiefung vorhanden sein, die insbesondere einen im Wesentlichen halbkreisförmigen Querschnitt aufweist. Durch Zusammensetzen der beiden Gehäusehälften kann sodann eine im Wesentlichen zylinderförmige und/oder rohrförmige Durchgangsöffnung ausgebildet werden. Die Durchgangsöffnung kann einen im Wesentlichen konstanten Querschnitt, beispielsweise in Längsrichtung der Gehäusehälfte, aufweisen.

An den Umfangsenden der halbschalenförmigen Vertiefung einer oder beider der Gehäusehälften können sich Montageflächen anschließen, die sich insbesondere in radialer Richtung des, insbesondere defekten, Mikrorohrs erstrecken können, beispielsweise im Wesentlichen quer zur Längsrichtung der Gehäusehälfte. Die beiden Gehäusehälften können grundsätzlich gleich aufgebaut sein, wobei wenigstens eine der Gehäusehälften, wenigstens eine Nut, vorzugsweise wenigstens zwei Nuten, zur Aufnahme und/oder zum Eingriff mit einem oder mehreren Auflagevorsprüngen des Dichtmittels gemäß einem oder mehreren der hierin beschriebenen Erfindungsaspekte und/oder Ausführungsbeispiele umfassen kann. Die eine oder die mehreren Nuten können jeweils an einer oder mehreren Montageflächen der Gehäusehälfte angeordnet sein, beispielsweise an gegenüberliegenden Enden der Gehäusehälfte. Vorzugsweise weist jede Gehäusehälfte zwei gegenüberliegende Montageflächen auf, wobei eine der Gehäusehälften in jeder der Montageflächen eine zusätzliche Nut aufweisen kann, die darin gebildet ist und/oder sich im Wesentlichen vollständig durch die Montagefläche(n) erstreckt.

Die halbzylinderförmigen Durchgangsöffnungen einer Gehäusehälfte können durch einen oder mehrere, z.B. zwei halbzylinderförmige, halbschalenförmige und/oder halbrohrförmige Mikrorohranlageabschnitte zur Anlage und/oder zum Eingriff mit dem, insbesondere defekten Mikrorohr, bzw. den Mikrorohrendstücken, begrenzt sein. Halbzylinderförmig, halbschalenförmig und/oder halbrohrförmig kann hierin einen im Wesentlichen halbkreisförmigen und/oder im Wesentlichen U-förmigen Querschnitt bezeichnen. Die Mikrorohranlageabschnitte können sich beispielsweise jeweils an den Endbereichen der Gehäusehälften befinden und/oder durch die Gehäusehälften ausgebildet sein. Die halbschalenförmigen Mikrorohranlageabschnitte können einen Aufnahmebereich für das Dichtmittel gemäß einem oder mehreren der hierin beschriebenen Erfindungsaspekte und/oder Ausführungsbeispiele begrenzen. Die halbschalenförmigen Mikrorohranlageabschnitte können eine Mikrorohraufnahmeöffnung definieren und/oder ausbilden, die insbesondere die Montage an den, z.B., Mikrorohrendstücken erleichtern kann. Die halbzylinderförmigen Durchgangsöffnungen können einen im Wesentlichen konstanten Querschnitt, beispielsweise in Längsrichtung der Gehäusehälfte, aufweisen. Es sei anzumerken, dass die definierte Mikrorohraufnahmeöffnung nicht zwangsweise im Wesentlichen kreisförmig, insbesondere im Wesentlichen vollkreisförmig, ausgebildet werden muss, beispielsweise können die Mikrorohranlageabschnitte an einer der Gehäusehälften und/oder einer Seite einer Gehäusehälfte entfallen. Dementsprechend kann die Form der Mikrorohranlageabschnitte auch weniger als halbzylinderförmig bzw. halbkreisförmig sein, beispielsweise im Querschnitt weniger als ein Halbkreis, z.B. ein Kreissegment.

Der Innenquerschnitt einer durch die Mikrorohranlageabschnitte ausgebildeten Öffnung, insbesondere der Mikrorohraufnahmeöffnung, kann geringer sein, als die Außenabmessung des, insbesondere defekten, Mikrorohrs. Beispielsweise kann die Mikrorohraufnahmeöffnung in Bezug auf das, insbesondere defekte, Mikrorohr leicht unterdimensioniert sein, um eine, insbesondere formschlüssige, Fixierung an dem Mikrorohr bereitzustellen, was die Montage erleichtern kann. Die Durchgangsöffnung kann einen größeren Durchmesser aufweisen als die Mikrorohraufnahmeöffnung(en), beispielsweise um Platz für das Dichtmittel gemäß einem oder mehreren der hierin beschriebenen Erfindungsaspekte und/oder Ausführungsbeispiele bereitzustellen und/oder dieses aufnehmen und/oder darin einschließen zu können.

Wenigstens eine der Gehäusehälften kann wenigstens ein Arretierelement umfassen, das eingerichtet ist, an dem, insbesondere defekten, Mikrorohr anzugreifen, insbesondere damit zu verkeilen, insbesondere zu verkrallen, insbesondere zum Sichern einer Position und/oder Ausrichtung der Verbindungsmuffe an dem, insbesondere defekten, Mikrorohr. Vorzugsweise können zwei Arretierelemente vorgesehen sein, beispielsweise eines für jedes Mikrorohrendstück.

Das wenigstens eine Arretierelement kann im Wesentlichen keilförmig ausgebildet sein, wobei auch andere Formen denkbar sind. Das wenigstens eine Arretierelement kann auf einer, dem, insbesondere defekten, Mikrorohr zugewandten bzw. zuzuwendenden Seite, insbesondere einer Innenseite der wenigstens einen Gehäusehälfte, angeordnet sein, beispielsweise, um damit einzugreifen, insbesondere sich damit zu verkeilen und/oder zu verkrallen. Die Form des wenigstens einen Arretierelements kann einer Innenform der wenigstens einen Gehäusehälfte entsprechen. Beispielsweise kann das wenigstens eine Arretierelement im Wesentlichen halbschalenförmig ausgestaltet sein. Das Arretierelement kann entweder separat und/oder individuell von der Verbindungsmuffe bzw. der Gehäusehälfte ausgebildet sein, beispielsweise aus einem Metall, insbesondere einem nicht-rostenden Metall, vorzugsweise Edelstahl, hergestellt sein, oder aber einstückig mit der Verbindungsmuffe bzw. der Gehäusehälfte.

Das wenigstens eine Arretierelement kann in einem halbschalenförmigen Mikrorohranlageabschnitt der wenigstens einen Gehäusehälfte angeordnet sein, insbesondere darin eingebettet sein, wobei der halbschalenförmige Mikrorohranlageabschnitt durch die wenigstens eine Gehäusehälfte ausgebildet sein kann. Der halbschalenförmige Mikrorohranlageabschnitt kann insbesondere einen Aufnahmebereich für das Dichtmittel begrenzen, und insbesondere kann dessen Innenquerschnitt geringer sein als die Außenabmessung des, insbesondere defekten, Mikrorohrs.

Gemäß einem Aspekt der Erfindung, der mit einem oder mehreren der hierin beschriebenen Erfindungsaspekte und/oder Ausführungsbeispiele kombinierbar ist, ist eine Verbindungsmuffe, insbesondere Halbschalenverbindungsmuffe, für ein, insbesondere defektes, Mikrorohr, bereitgestellt, die eingerichtet sein kann zum Verbinden von Mikrorohrendstücken eines defekten, insbesondere unterbrochenen, Mikrorohrs oder zweier verschiedener Mikrorohre. Mittels der erfindungsgemäßen Verbindungsmuffe können, insbesondere defekte, Mikrorohre repariert werden. Die Verbindungsmuffe kann zwei Gehäusehälften umfassen, insbesondere zwei Halbschalenhülsen, die, in einem montierten Zustand aneinander anliegen und/oder aufeinandergesetzt sind. Die Verbindungsmuffe kann im montierten Zustand im Wesentlichen zylinderförmig, beispielsweise hohl-zylinderförmig, und/oder im Wesentlichen rohrförmig ausgebildet sein. Die zwei Gehäusehälften, insbesondere Halbschalenhülsen, können ausgestaltet sein ein Dichtmittel, insbesondere gemäß einem oder mehreren der hierin beschriebenen Erfindungsaspekte und/oder Ausführungsbeispiele, und/oder einen Mikrorohreinsatz, gemäß einem oder mehreren der hierin beschriebenen Erfindungsaspekte und/oder Ausführungsbeispiele, aufzunehmen und/oder darin einzuschließen. Es sei klar, dass auch das, insbesondere defekte, Mikrorohr bzw. die Mikrorohrendstücke in der Verbindungsmuffe aufgenommen werden.

Die Gehäusehälften können mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sein. Die einer oder mehrerer Verbindungsklammern können beispielsweise auf die Führung geschoben werden, um die Gehäusehälften zu verspannen.

Beispielsweise kann die Verbindungsmuffe und/oder die Gehäusehälften, insbesondere an einer Außenseite, eine oder mehrere Leisten, insbesondere Führungsleisten, vorzugsweise für die hierin beschriebenen Verbindungsklammern, insbesondere die Schubklemmhülsen, aufweisen und/oder ausbilden. Die eine oder die mehreren Leisten können z.B. geneigt sein, insbesondere im Wesentlichen keilförmig, insbesondere schwalbenschwanzförmig, verlaufen, beispielsweise in Längsrichtung der Verbindungsmuffe und/oder der Gehäusehälfte. Beispielsweise können sich die eine oder die mehreren Leisten von einem Mittelpunkt der Verbindungsmuffe und/oder der Gehäusehälfte in Richtung der Endbereiche der Verbindungsmuffe verjüngen. Vorzugsweise sind Leisten an der Außenseite des Verbindungsmuffe und/oder der Gehäusehälfte vorgesehen, insbesondere an gegenüberliegenden Außenseiten, der Verbindungsmuffe, die vorzugsweise im Wesentlichen identisch ausgestaltet sein können. Die Leisten können durch die beiden Gehäusehälften ausgebildet sein. Beispielsweise kann eine Gehäusehälfte einen Teil der Leiste, z.B. die eine Hälfte der Leiste, ausbilden und eine andere Gehäusehälfte den anderen Teil, z.B. die andere Hälfte der Leiste, ausbilden. Durch Montage der Gehäusehälften, insbesondere wenn diese aufeinandergesetzt werden, kann sich die endgültige Leiste ergeben, die mit einer Verbindungsklammer, insbesondere einer darin formkomplementär vorgesehenen Ausnehmung, insbesondere eine Nut, die ebenfalls im Wesentlichen keilförmig, insbesondere schwalbenschwanzförmig, ausgestaltet ist, eingreifen kann, um die Gehäusehälften der Verbindungsmuffe zu verspannen, insbesondere aneinander zu befestigen, vorzugsweise form- und/oder kraftschlüssig.

Die Gehäusehälften, insbesondere Halbschalenhülsen, können aus einem Material hergestellt sein, dass eine Dichte von in etwa 1,07 g/m³, ein Elastizitätsmodul (E-Modul) von in etwa 1950 Mpa und/oder eine Zugfestigkeit von in etwa 1900 MPa aufweisen kann. Die Gehäusehälften können, insbesondere in einem montierten Zustand, z.B. wenn die beiden Gehäusehälften aufeinander liegen, bzw. aufeinandergesetzt sind, einen Aufnahmebereich aufweisen, definieren und/oder ausbilden, insbesondere eine Durchgangsöffnung, zur Aufnahme des, insbesondere defekten, Mikrorohrs bzw. von Mikrorohrendstücken. Beispielsweise kann in jeder Gehäusehälfte eine halbzylinderförmige, halbschalenförmige und/oder halbrohrförmige Vertiefung vorhanden sein, die insbesondere einen im Wesentlichen halbkreisförmigen Querschnitt aufweist. Durch Zusammensetzen der beiden Gehäusehälften kann sodann eine im Wesentlichen zylinderförmige und/oder rohrförmige Durchgangsöffnung ausgebildet werden. Die Durchgangsöffnung kann einen im Wesentlichen konstanten Querschnitt, beispielsweise in Längsrichtung der Gehäusehälfte, aufweisen.

An den Umfangsenden der halbschalenförmigen Vertiefung einer oder beider der Gehäusehälften können sich Montageflächen anschließen, die sich insbesondere in radialer Richtung des, insbesondere defekten, Mikrorohrs erstrecken können, beispielsweise im Wesentlichen quer zur Längsrichtung der Gehäusehälfte. Die beiden Gehäusehälften können grundsätzlich gleich aufgebaut sein, wobei wenigstens eine der Gehäusehälften, wenigstens eine Nut, vorzugsweise wenigstens zwei Nuten, zur Aufnahme und/oder zum Eingriff mit einem oder mehreren Auflagevorsprüngen des Dichtmittels gemäß einem oder mehreren der hierin beschriebenen Erfindungsaspekte und/oder Ausführungsbeispiele umfassen kann. Die eine oder die mehreren Nuten können jeweils an einer oder mehreren Montageflächen der Gehäusehälfte angeordnet sein, beispielsweise an gegenüberliegenden Enden der Gehäusehälfte. Vorzugsweise weist jede Gehäusehälfte zwei gegenüberliegende Montageflächen auf, wobei eine der Gehäusehälften in jeder der Montageflächen eine zusätzliche Nut aufweisen kann, die darin gebildet ist und/oder sich im Wesentlichen vollständig durch die Montagefläche(n) erstreckt.

Die halbzylinderförmigen Durchgangsöffnungen einer Gehäusehälfte können durch einen oder mehrere, z.B. zwei halbzylinderförmige, halbschalenförmige und/oder halbrohrförmige Mikrorohranlageabschnitte zur Anlage und/oder zum Eingriff mit dem, insbesondere defekten Mikrorohr, bzw. den Mikrorohrendstücken, begrenzt sein. Halbzylinderförmig, halbschalenförmig und/oder halbrohrförmig kann hierin einen im Wesentlichen halbkreisförmigen und/oder im Wesentlichen U-förmigen Querschnitt bezeichnen. Die Mikrorohranlageabschnitte können sich beispielsweise jeweils an den Endbereichen der Gehäusehälften befinden und/oder durch die Gehäusehälften ausgebildet sein. Die halbschalenförmigen Mikrorohranlageabschnitte können einen Aufnahmebereich für das Dichtmittel gemäß einem oder mehreren der hierin beschriebenen Erfindungsaspekte und/oder Ausführungsbeispiele begrenzen. Die halbschalenförmigen Mikrorohranlageabschnitte können eine Mikrorohraufnahmeöffnung definieren und/oder ausbilden, die insbesondere die Montage an den, z.B., Mikrorohrendstücken erleichtern kann. Die halbzylinderförmigen Durchgangsöffnungen können einen im Wesentlichen konstanten Querschnitt, beispielsweise in Längsrichtung der Gehäusehälfte, aufweisen. Es sei anzumerken, dass die definierte Mikrorohraufnahmeöffnung nicht zwangsweise im Wesentlichen kreisförmig, insbesondere im Wesentlichen vollkreisförmig, ausgebildet werden muss, beispielsweise können die Mikrorohranlageabschnitte an einer der Gehäusehälften und/oder einer Seite einer Gehäusehälfte entfallen. Dementsprechend kann die Form der Mikrorohranlageabschnitte auch weniger als halbzylinderförmig sein, beispielsweise im Querschnitt weniger als ein Halbkreis, z.B. ein Kreissegment.

Der Innenquerschnitt einer durch die Mikrorohranlageabschnitte ausgebildeten Öffnung, insbesondere der Mikrorohraufnahmeöffnung, kann geringer sein, als die Außenabmessung des, insbesondere defekten, Mikrorohrs. Beispielsweise kann die Mikrorohraufnahmeöffnung in Bezug auf das, insbesondere defekte, Mikrorohr leicht unterdimensioniert sein, um eine, insbesondere formschlüssige, Fixierung an dem Mikrorohr bereitzustellen, was die Montage erleichtern kann. Die Durchgangsöffnung kann einen größeren Durchmesser aufweisen als die Mikrorohraufnahmeöffnung(en), beispielsweise um Platz für das Dichtmittel gemäß einem oder mehreren der hierin beschriebenen Erfindungsaspekte und/oder Ausführungsbeispiele bereitzustellen und/oder dieses aufnehmen und/oder darin einschließen zu können.

Ein Winkel, insbesondere ein Keilwinkel, der Schwalbenschwanz-Führungen kann weniger als in etwa 3°, insbesondere weniger als in etwa 2°, vorzugsweise 1,5° betragen. Beispielsweise können die eine oder die mehreren Leisten sich unter einem Keilwinkel von in etwa 3°, insbesondere weniger als in etwa 2°, vorzugsweise 1,5° neigen, insbesondere verlaufen bzw. sich erstrecken. Beispielsweise können die eine oder die mehreren Leisten sich unter diesen Winkeln jeweils von einer Mitte der Gehäusehälfte bzw. der Verbindungsmuffe nach außen neigen, insbesondere verlaufen bzw. sich erstrecken. Dieser kleiner Winkelbereich ermöglicht eine einerseits stabile und andererseits einfache Befestigung der Verbindungsmuffe.

Gemäß einem Aspekt der Erfindung, der mit einem oder mehreren der hierin beschriebenen Erfindungsaspekte und/oder Ausführungsbeispiele kombinierbar ist, ist eine Verbindungsmuffe, insbesondere Halbschalenverbindungsmuffe, für ein, insbesondere defektes, Mikrorohr, bereitgestellt, die eingerichtet sein kann zum Verbinden von Mikrorohrendstücken eines defekten, insbesondere unterbrochenen, Mikrorohrs oder zweier verschiedener Mikrorohre. Mittels der erfindungsgemäßen Verbindungsmuffe können, insbesondere defekte, Mikrorohre repariert werden. Die Verbindungsmuffe kann zwei Gehäusehälften umfassen, insbesondere zwei Halbschalenhülsen, die, in einem montierten Zustand aneinander anliegen und/oder aufeinandergesetzt sind. Die Verbindungsmuffe kann im montierten Zustand im Wesentlichen zylinderförmig, beispielsweise hohl-zylinderförmig, und/oder im Wesentlichen rohrförmig ausgebildet sein. Die zwei Gehäusehälften, insbesondere Halbschalenhülsen, können ausgestaltet sein ein Dichtmittel, insbesondere gemäß einem oder mehreren der hierin beschriebenen Erfindungsaspekte und/oder Ausführungsbeispiele, und/oder einen Mikrorohreinsatz, gemäß einem oder mehreren der hierin beschriebenen Erfindungsaspekte und/oder Ausführungsbeispiele, aufzunehmen und/oder darin einzuschließen. Es sei klar, dass auch das, insbesondere defekte, Mikrorohr bzw. die Mikrorohrendstücke in der Verbindungsmuffe aufgenommen werden.

Die Gehäusehälften können mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sein. Die einer oder mehrerer Verbindungsklammern können beispielsweise auf die Führung geschoben werden, um die Gehäusehälften zu verspannen.

Beispielsweise kann die Verbindungsmuffe und/oder die Gehäusehälften, insbesondere an einer Außenseite, eine oder mehrere Leisten, insbesondere Führungsleisten, vorzugsweise für die hierin beschriebenen Verbindungsklammern, insbesondere die Schubklemmhülsen, aufweisen und/oder ausbilden. Die eine oder die mehreren Leisten können z.B. geneigt sein, insbesondere im Wesentlichen keilförmig, insbesondere schwalbenschwanzförmig, verlaufen, beispielsweise in Längsrichtung der Verbindungsmuffe und/oder der Gehäusehälfte. Beispielsweise können sich die eine oder die mehreren Leisten von einem Mittelpunkt der Verbindungsmuffe und/oder der Gehäusehälfte in Richtung der Endbereiche der Verbindungsmuffe verjüngen. Vorzugsweise sind die Leisten an der Außenseite des Verbindungsmuffe und/oder der Gehäusehälfte vorgesehen, insbesondere an gegenüberliegenden Außenseiten, der Verbindungsmuffe, die vorzugsweise im Wesentlichen identisch ausgestaltet sein können. Die Leisten können durch die beiden Gehäusehälften ausgebildet sein. Beispielsweise kann eine Gehäusehälfte einen Teil der Leiste, z.B. die eine Hälfte der Leiste, ausbilden und eine andere Gehäusehälfte den anderen Teil, z.B. die andere Hälfte der Leiste, ausbilden. Durch Montage der Gehäusehälften, insbesondere wenn diese aufeinandergesetzt werden, kann sich die endgültige Leiste ergeben, die mit einer Verbindungsklammer, insbesondere einer Schubklemmhülse, insbesondere einer darin formkomplementär vorgesehenen Ausnehmung, insbesondere eine Nut, die ebenfalls im Wesentlichen keilförmig, insbesondere schwalbenschwanzförmig, ausgestaltet ist, eingreifen kann, um die Gehäusehälften der Verbindungsmuffe zu verspannen, insbesondere aneinander zu befestigen, vorzugsweise form- und/oder kraftschlüssig.

Die Gehäusehälften, insbesondere Halbschalenhülsen, können aus einem Material hergestellt sein, dass eine Dichte von in etwa 1,07 g/m³, ein Elastizitätsmodul (E-Modul) von in etwa 1950 Mpa und/oder eine Zugfestigkeit von in etwa 1900 MPa aufweisen kann. Die Gehäusehälften können, insbesondere in einem montierten Zustand, z.B. wenn die beiden Gehäusehälften aufeinander liegen, bzw. aufeinandergesetzt sind, einen Aufnahmebereich aufweisen, definieren und/oder ausbilden, insbesondere eine Durchgangsöffnung, zur Aufnahme des, insbesondere defekten, Mikrorohrs bzw. von Mikrorohrendstücken. Beispielsweise kann in jeder Gehäusehälfte eine halbzylinderförmige, halbschalenförmige und/oder halbrohrförmige Vertiefung vorhanden sein, die insbesondere einen im Wesentlichen halbkreisförmigen Querschnitt aufweist. Durch Zusammensetzen der beiden Gehäusehälften kann sodann eine im Wesentlichen zylinderförmige und/oder rohrförmige Durchgangsöffnung ausgebildet werden. Die Durchgangsöffnung kann einen im Wesentlichen konstanten Querschnitt, beispielsweise in Längsrichtung der Gehäusehälfte, aufweisen.

An den Umfangsenden der halbschalenförmigen Vertiefung einer oder beider der Gehäusehälften können sich Montageflächen anschließen, die sich insbesondere in radialer Richtung des, insbesondere defekten, Mikrorohrs erstrecken können, beispielsweise im Wesentlichen quer zur Längsrichtung der Gehäusehälfte. Die beiden Gehäusehälften können grundsätzlich gleich aufgebaut sein, wobei wenigstens eine der Gehäusehälften, wenigstens eine Nut, vorzugsweise wenigstens zwei Nuten, zur Aufnahme und/oder zum Eingriff mit einem oder mehreren Auflagevorsprüngen des Dichtmittels gemäß einem oder mehreren der hierin beschriebenen Erfindungsaspekte und/oder Ausführungsbeispiele umfassen kann. Die eine oder die mehreren Nuten können jeweils an einer oder mehreren Montageflächen der Gehäusehälfte angeordnet sein, beispielsweise an gegenüberliegenden Enden der Gehäusehälfte. Vorzugsweise weist jede Gehäusehälfte zwei gegenüberliegende Montageflächen auf, wobei eine der Gehäusehälften in jeder der Montageflächen eine zusätzliche Nut aufweisen kann, die darin gebildet ist und/oder sich im Wesentlichen vollständig durch die Montagefläche(n) erstreckt.

Die halbzylinderförmigen Durchgangsöffnungen einer Gehäusehälfte können durch einen oder mehrere, z.B. zwei halbzylinderförmige, halbschalenförmige und/oder halbrohrförmige Mikrorohranlageabschnitte zur Anlage und/oder zum Eingriff mit dem, insbesondere defekten Mikrorohr, bzw. den Mikrorohrendstücken, begrenzt sein. Halbzylinderförmig, halbschalenförmig und/oder halbrohrförmig kann hierin einen im Wesentlichen halbkreisförmigen und/oder im Wesentlichen U-förmigen Querschnitt bezeichnen. Die Mikrorohranlageabschnitte können sich beispielsweise jeweils an den Endbereichen der Gehäusehälften befinden und/oder durch die Gehäusehälften ausgebildet sein. Die halbschalenförmigen Mikrorohranlageabschnitte können einen Aufnahmebereich für das Dichtmittel gemäß einem oder mehreren der hierin beschriebenen Erfindungsaspekte und/oder Ausführungsbeispiele begrenzen. Die halbschalenförmigen Mikrorohranlageabschnitte können eine Mikrorohraufnahmeöffnung definieren und/oder ausbilden, die insbesondere die Montage an den, z.B., Mikrorohrendstücken erleichtern kann. Die halbzylinderförmigen Durchgangsöffnungen können einen im Wesentlichen konstanten Querschnitt, beispielsweise in Längsrichtung der Gehäusehälfte, aufweisen. Es sei anzumerken, dass die definierte Mikrorohraufnahmeöffnung nicht zwangsweise im Wesentlichen kreisförmig, insbesondere im Wesentlichen vollkreisförmig, ausgebildet werden muss, beispielsweise können die Mikrorohranlageabschnitte an einer der Gehäusehälften und/oder einer Seite einer Gehäusehälfte entfallen. Dementsprechend kann die Form der Mikrorohranlageabschnitte auch weniger als halbzylinderförmig sein, beispielsweise im Querschnitt weniger als ein Halbkreis, z.B. ein Kreissegment.

Der Innenquerschnitt einer durch die Mikrorohranlageabschnitte ausgebildeten Öffnung, insbesondere der Mikrorohraufnahmeöffnung, kann geringer sein, als die Außenabmessung des, insbesondere defekten, Mikrorohrs. Beispielsweise kann die Mikrorohraufnahmeöffnung in Bezug auf das, insbesondere defekte, Mikrorohr leicht unterdimensioniert sein, um eine, insbesondere formschlüssige, Fixierung an dem Mikrorohr bereitzustellen, was die Montage erleichtern kann. Die Durchgangsöffnung kann einen größeren Durchmesser aufweisen als die Mikrorohraufnahmeöffnung(en), beispielsweise um Platz für das Dichtmittel gemäß einem oder mehreren der hierin beschriebenen Erfindungsaspekte und/oder Ausführungsbeispiele bereitzustellen und/oder dieses aufnehmen und/oder darin einschließen zu können.

Wenigstens eine der Gehäusehälften, insbesondere der Halbschalenhülsen, kann auf einer Außenseite der wenigstens einen Gehäusehälfte, wenigstens eine Vertiefung, insbesondere eine Vertiefungsrippe, aufweisen. Vorzugsweise weist wenigstens eine, vorzugsweise beide, der Gehäusehälften insbesondere der Halbschalenhülsen, eine Mehrzahl von Vertiefungen, insbesondere Vertiefungsrippen, auf. Die Vertiefungsrippen können eine Art Tasche oder Hohlraum, insbesondere dazwischen, definieren und/oder begrenzen und die Stabilität der Verbindungsmuffe und/oder der entsprechenden Gehäusehälfte erhöhen können. Die Mehrzahl der Vertiefungsrippen und/oder der dadurch gebildeten Taschen und/oder Hohlräume können insbesondere paarweise angeordnet sein und/oder im Wesentlichen rechteckig ausgestaltet sein und/oder unterschiedliche Tiefen aufweisen. Auch andere Formen als rechteckig sind denkbar, beispielsweise rundlich, blasenartig, sternartig, eckig, wabenartig, polygonal und/oder eine über die Außenseite verlaufene, beispielsweise im Wesentlichen geschwungene, stufige und/oder geradlinige Form.

Die wenigstens eine Vertiefung, insbesondere die Vertiefungsrippe, und/oder die dadurch gebildeten Taschen und/oder Hohlräume, können in einem Bereich zwischen den Schwalbenschwanz-Führungen, insbesondere zwischen den Leisten der Schwalbenschwanz-Führungen, angeordnet sein, beispielsweise auf einer Außenseite der Gehäusehälfte. Eine Tiefe der Vertiefung, insbesondere die Vertiefungsrippe, und/oder die dadurch gebildeten Taschen und/oder Hohlräume, kann kleiner sein als eine Dicke der Gehäusehälfte. Mit anderen Worten, die Taschen und/oder Hohlräume erstrecken sich nicht komplett durch die Gehäusehälfte.

Gemäß einem Aspekt der Erfindung, der mit einem oder mehreren der hierin beschriebenen Erfindungsaspekte und/oder Ausführungsbeispiele kombinierbar ist, ist eine Verbindungsmuffe, insbesondere Halbschalenverbindungsmuffe, für ein, insbesondere defektes, Mikrorohr, bereitgestellt, die eingerichtet sein kann zum Verbinden von Mikrorohrendstücken eines defekten, insbesondere unterbrochenen, Mikrorohrs oder zweier verschiedener Mikrorohre. Mittels der erfindungsgemäßen Verbindungsmuffe können, insbesondere defekte, Mikrorohre repariert werden. Die Verbindungsmuffe kann zwei Gehäusehälften umfassen, insbesondere zwei Halbschalenhülsen, die, in einem montierten Zustand aneinander anliegen und/oder aufeinandergesetzt sind. Die Verbindungsmuffe kann im montierten Zustand im Wesentlichen zylinderförmig, beispielsweise hohl-zylinderförmig, und/oder im Wesentlichen rohrförmig ausgebildet sein. Die zwei Gehäusehälften, insbesondere Halbschalenhülsen, können ausgestaltet sein ein Dichtmittel, insbesondere gemäß einem oder mehreren der hierin beschriebenen Erfindungsaspekte und/oder Ausführungsbeispiele, und/oder einen Mikrorohreinsatz, gemäß einem oder mehreren der hierin beschriebenen Erfindungsaspekte und/oder Ausführungsbeispiele, aufzunehmen und/oder darin einzuschließen. Es sei klar, dass auch das, insbesondere defekte, Mikrorohr bzw. die Mikrorohrendstücke in der Verbindungsmuffe aufgenommen werden.

Die Gehäusehälften können mittels einer oder mehrerer Verbindungsklammern, insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sein. Die einer oder mehrerer Verbindungsklammern können beispielsweise auf die Führung geschoben werden, um die Gehäusehälften zu verspannen.

Beispielsweise kann die Verbindungsmuffe und/oder die Gehäusehälften, insbesondere an einer Außenseite, eine oder mehrere Leisten, insbesondere Führungsleisten, vorzugsweise für die hierin beschriebenen Verbindungsklammern, insbesondere die Schubklemmhülsen, aufweisen und/oder ausbilden. Die eine oder die mehreren Leisten können z.B. geneigt sein, insbesondere im Wesentlichen keilförmig, insbesondere schwalbenschwanzförmig, verlaufen, beispielsweise in Längsrichtung der Verbindungsmuffe und/oder der Gehäusehälfte. Beispielsweise können sich die eine oder die mehreren Leisten von einem Mittelpunkt der Verbindungsmuffe und/oder der Gehäusehälfte in Richtung der Endbereiche der Verbindungsmuffe verjüngen. Vorzugsweise sind die Leisten an der Außenseite des Verbindungsmuffe und/oder der Gehäusehälfte vorgesehen, insbesondere an gegenüberliegenden Außenseiten, der Verbindungsmuffe, die vorzugsweise im Wesentlichen identisch ausgestaltet sein können. Die Leisten können durch die beiden Gehäusehälften ausgebildet sein. Beispielsweise kann eine Gehäusehälfte einen Teil der Leiste, z.B. die eine Hälfte der Leiste, ausbilden und eine andere Gehäusehälfte den anderen Teil, z.B. die andere Hälfte der Leiste, ausbilden. Durch Montage der Gehäusehälften, insbesondere wenn diese aufeinandergesetzt werden, kann sich die endgültige Leiste ergeben, die mit einer Verbindungsklammer, insbesondere einer darin formkomplementär vorgesehenen Ausnehmung, insbesondere eine Nut, die ebenfalls im Wesentlichen keilförmig, insbesondere schwalbenschwanzförmig, ausgestaltet ist, eingreifen kann, um die Gehäusehälften der Verbindungsmuffe zu verspannen, insbesondere aneinander zu befestigen, vorzugsweise form- und/oder kraftschlüssig.

Die Gehäusehälften, insbesondere Halbschalenhülsen, können aus einem Material hergestellt sein, dass eine Dichte von in etwa 1,07 g/m³, ein Elastizitätsmodul (E-Modul) von in etwa 1950 Mpa und/oder eine Zugfestigkeit von in etwa 1900 MPa aufweisen kann. Die Gehäusehälften können, insbesondere in einem montierten Zustand, z.B. wenn die beiden Gehäusehälften aufeinander liegen, bzw. aufeinandergesetzt sind, einen Aufnahmebereich aufweisen, definieren und/oder ausbilden, insbesondere eine Durchgangsöffnung, zur Aufnahme des, insbesondere defekten, Mikrorohrs bzw. von Mikrorohrendstücken. Beispielsweise kann in jeder Gehäusehälfte eine halbzylinderförmige, halbschalenförmige und/oder halbrohrförmige Vertiefung vorhanden sein, die insbesondere einen im Wesentlichen halbkreisförmigen Querschnitt aufweist. Durch Zusammensetzen der beiden Gehäusehälften kann sodann eine im Wesentlichen zylinderförmige und/oder rohrförmige Durchgangsöffnung ausgebildet werden. Die Durchgangsöffnung kann einen im Wesentlichen konstanten Querschnitt, beispielsweise in Längsrichtung der Gehäusehälfte, aufweisen.

An den Umfangsenden der halbschalenförmigen Vertiefung einer oder beider der Gehäusehälften können sich Montageflächen anschließen, die sich insbesondere in radialer Richtung des, insbesondere defekten, Mikrorohrs erstrecken können, beispielsweise im Wesentlichen quer zur Längsrichtung der Gehäusehälfte. Die beiden Gehäusehälften können grundsätzlich gleich aufgebaut sein, wobei wenigstens eine der Gehäusehälften, wenigstens eine Nut, vorzugsweise wenigstens zwei Nuten, zur Aufnahme und/oder zum Eingriff mit einem oder mehreren Auflagevorsprüngen des Dichtmittels gemäß einem oder mehreren der hierin beschriebenen Erfindungsaspekte und/oder Ausführungsbeispiele umfassen kann. Die eine oder die mehreren Nuten können jeweils an einer oder mehreren Montageflächen der Gehäusehälfte angeordnet sein, beispielsweise an gegenüberliegenden Enden der Gehäusehälfte. Vorzugsweise weist jede Gehäusehälfte zwei gegenüberliegende Montageflächen auf, wobei eine der Gehäusehälften in jeder der Montageflächen eine zusätzliche Nut aufweisen kann, die darin gebildet ist und/oder sich im Wesentlichen vollständig durch die Montagefläche(n) erstreckt.

Die halbzylinderförmigen Durchgangsöffnungen einer Gehäusehälfte können durch einen oder mehrere, z.B. zwei halbzylinderförmige, halbschalenförmige und/oder halbrohrförmige Mikrorohranlageabschnitte zur Anlage und/oder zum Eingriff mit dem, insbesondere defekten Mikrorohr, bzw. den Mikrorohrendstücken, begrenzt sein. Halbzylinderförmig, halbschalenförmig und/oder halbrohrförmig kann hierin einen im Wesentlichen halbkreisförmigen und/oder im Wesentlichen U-förmigen Querschnitt bezeichnen. Die Mikrorohranlageabschnitte können sich beispielsweise jeweils an den Endbereichen der Gehäusehälften befinden und/oder durch die Gehäusehälften ausgebildet sein. Die halbschalenförmigen Mikrorohranlageabschnitte können einen Aufnahmebereich für das Dichtmittel gemäß einem oder mehreren der hierin beschriebenen Erfindungsaspekte und/oder Ausführungsbeispiele begrenzen. Die halbschalenförmigen Mikrorohranlageabschnitte können eine Mikrorohraufnahmeöffnung definieren und/oder ausbilden, die insbesondere die Montage an den, z.B., Mikrorohrendstücken erleichtern kann. Die halbzylinderförmigen Durchgangsöffnungen können einen im Wesentlichen konstanten Querschnitt, beispielsweise in Längsrichtung der Gehäusehälfte, aufweisen. Es sei anzumerken, dass die definierte Mikrorohraufnahmeöffnung nicht zwangsweise im Wesentlichen kreisförmig, insbesondere im Wesentlichen vollkreisförmig, ausgebildet werden muss, beispielsweise können die Mikrorohranlageabschnitte an einer der Gehäusehälften und/oder einer Seite einer Gehäusehälfte entfallen. Dementsprechend kann die Form der Mikrorohranlageabschnitte auch weniger als halbzylinderförmig sein, beispielsweise im Querschnitt weniger als ein Halbkreis, z.B. ein Kreissegment.

Der Innenquerschnitt einer durch die Mikrorohranlageabschnitte ausgebildeten Öffnung, insbesondere der Mikrorohraufnahmeöffnung, kann geringer sein, als die Außenabmessung des, insbesondere defekten, Mikrorohrs. Beispielsweise kann die Mikrorohraufnahmeöffnung in Bezug auf das, insbesondere defekte, Mikrorohr leicht unterdimensioniert sein, um eine, insbesondere formschlüssige, Fixierung an dem Mikrorohr bereitzustellen, was die Montage erleichtern kann. Die Durchgangsöffnung kann einen größeren Durchmesser aufweisen als die Mikrorohraufnahmeöffnung(en), beispielsweise um Platz für das Dichtmittel gemäß einem oder mehreren der hierin beschriebenen Erfindungsaspekte und/oder Ausführungsbeispiele bereitzustellen und/oder dieses aufnehmen und/oder darin einschließen zu können.

Wenigstens eine der Gehäusehälften kann einen Querschnitt aufweisen, der sich in Längsrichtung der wenigstens einen Gehäusehälfte ändert. Diese Querschnittsänderung kann beispielsweise die Stabilität der Gehäusehälfte und/oder der Verbindungsmuffe als solche erhöhen. Die wenigstens eine Gehäusehälfte kann, beispielsweise mittig, eine radial nach außen ragende Erweiterung aufweisen, z.B. eine Erhebung. Der Querschnitt der wenigstens einen Gehäusehälfte kann sich von der nach außen ragenden Erweiterung ausgehend zu Endbereichen der wenigstens einen Gehäusehälfte ändern, insbesondere abnehmen, sich vorzugsweise verjüngen, wobei insbesondere der Querschnitt wenigstens abschnittsweise keilförmig ausgestaltet ist. Beispielsweise kann eine Höhe der wenigstens einen Gehäusehälfte von der nach außen ragenden Erweiterung zu Endbereichen der wenigstens einen Gehäusehälfte, beispielsweise bis zu den Mikrorohranlageabschnitten, abnehmen, insbesondere unter einem Winkel von in etwa 2°.

Eine Breite der wenigstens einen Gehäusehälfte, insbesondere in einer Richtung quer zur Längsrichtung der Gehäusehälfte, kann von der nach außen ragenden Erweiterung zu Endbereichen der wenigstens einen Gehäusehälfte und/oder über eine gesamte Länge der wenigstens einen Gehäusehälfte, im Wesentlichen konstant sein.

Gemäß einem Aspekt der Erfindung können eine oder mehrere Verbindungsklammern, insbesondere eine oder mehrere Schubklemmhülsen, bereitgestellt sein, insbesondere zum Verspannen von Gehäusehälften für eine Verbindungsmuffe, insbesondere eine Halbschalenverbindungsmuffe, insbesondere gemäß einem oder mehreren der hierin beschriebenen Erfindungsaspekte und/oder Ausführungsbeispiele. Die Verbindungsklammer, insbesondere Schubklemmhülse, kann eine Ausnehmung, insbesondere eine Nut, aufweisen, beispielsweise an einer der Verbindungsmuffe, insbesondere einer oder mehrerer der Leisten, zuzuwendenden Seite. Die Ausnehmung kann beispielsweise formkomplementär zu der einen oder der mehreren Leisten der Verbindungsmuffe ausgestaltet sein, z.B. im Wesentlichen keilförmig, insbesondere schwalbenschwanzförmig, um beispielsweise damit eingreifen zu können, um die Gehäusehälften der Verbindungsmuffe zu verspannen, insbesondere aneinander zu befestigen, vorzugsweise form- und/oder kraftschlüssig. Die Verbindungsklammer, insbesondere die Schubklemmhülse, kann eine gewölbte, gekrümmte, rundliche, und/oder teilzylinderartige Oberfläche, insbesondere eine Außenfläche aufweisen, beispielsweise an einer Außenseite, die im Querschnitt wenigstens teilzylinderförmig und/oder teilkreisförmig ausgestaltet sein kann, z.B. ein Kreissegment definieren, z.B. halbkreisförmig oder weniger als halbkreisförmig.

Die Verbindungsklammer, insbesondere die Schubklemmhülse, kann einen im Wesentlichen länglichen Klemmkörper umfassen, wobei der im Wesentlichen länglichen Klemmkörper eine Breite aufweisen kann, die sich, insbesondere in dessen Längsrichtung, ändert. Beispielsweise kann der im Wesentlichen längliche Klemmkörper, insbesondere in dessen Längsrichtung, im Wesentlichen keilförmig ausgestaltet sein. Eine beispielhafte Länge der Verbindungsklammer kann in einem Bereich von in etwa 10 cm bis in etwa 14cm, vorzugsweise in etwa 12cm liegen. Die Breite des im Wesentlichen längliche Klemmkörpers kann, insbesondere in dessen Längsrichtung, unter einem Winkel von weniger als in etwa 3°, insbesondere weniger als in etwa 2°, vorzugsweise 1,5° abnehmen. Beispielhafte Breiten der Verbindungsklammer können sich aus den Winkelbereichen ergeben.

Gemäß einem Aspekt der Erfindung, der mit einem oder mehreren der hierin beschriebenen Erfindungsaspekte und/oder Ausführungsbeispiele kombinierbar ist, können eine oder mehrere Verbindungsklammern, insbesondere eine oder mehrere Schubklemmhülsen, bereitgestellt sein, insbesondere zum Verspannen von Gehäusehälften für eine Verbindungsmuffe, insbesondere eine Halbschalenverbindungsmuffe, insbesondere gemäß einem oder mehreren der hierin beschriebenen Erfindungsaspekte und/oder Ausführungsbeispiele. Die Verbindungsklammer, insbesondere Schubklemmhülse, kann eine Ausnehmung, insbesondere eine Nut, aufweisen, beispielsweise an einer der Verbindungsmuffe, insbesondere einer oder mehrerer der Leisten, zuzuwendenden Seite. Die Ausnehmung kann beispielsweise formkomplementär zu der einen oder der mehreren Leisten der Verbindungsmuffe ausgestaltet sein, z.B. im Wesentlichen keilförmig, insbesondere schwalbenschwanzförmig, um beispielsweise damit eingreifen zu können, um die Gehäusehälften der Verbindungsmuffe zu verspannen, insbesondere aneinander zu befestigen, vorzugsweise form- und/oder kraftschlüssig. Die Verbindungsklammer, insbesondere die Schubklemmhülse, kann eine gewölbte, gekrümmte, rundliche, und/oder teilzylinderartige Oberfläche, insbesondere eine Außenfläche aufweisen, beispielsweise an einer Außenseite, die im Querschnitt wenigstens teilzylinderförmig und/oder teilkreisförmig ausgestaltet sein kann, z.B. ein Kreissegment definieren, z.B. halbkreisförmig oder weniger als halbkreisförmig.

Die Verbindungsklammer, insbesondere die Schubklemmhülse, kann einen im Wesentlichen länglichen Klemmkörper umfassen, der im Wesentlichen längliche Klemmkörper, insbesondere auf einer Außenseite, wenigstens einen Vorsprung, insbesondere wenigstens eine Rippe aufweisen kann, insbesondere zum Anbringen der Verbindungsklammer, insbesondere der Schubklemmhülse, an den Gehäusehälften. Der wenigstens eine Vorsprung, insbesondere die wenigstens eine Rippe, kann im Wesentlichen länglich ausgestaltet sein und/oder im Wesentlichen quer zu einer Längsrichtung des im Wesentlichen länglichen Klemmkörpers verlaufen, insbesondere im Wesentlichen über dessen gesamte Außenseite. Der im Wesentlichen länglichen Klemmkörper kann auch eine Mehrzahl von Vorsprüngen, insbesondere eine Mehrzahl von Rippen, aufweisen, die insbesondere in gleichmäßigen Abständen und/oder parallel zueinander auf dessen Außenseite angeordnet sind, wobei die Vorsprünge unterschiedliche Längen aufweisen, beispielsweise bedingt durch die verändernde Breite der Verbindungsklammer. Die Rippen können zusätzlichen Grip bereitstellten und die Montage der Verbindungsmuffe erleichtern. Beispielsweise kann über die Rippen eine erhöhte Kraft zum Verspannen der Verbindungsmuffe bereitgestellt werden und ein Abrutschen bei der Montage verhindert und/oder reduziert werden. Eine beispielhafte Länge der Verbindungsklammer kann in einem Bereich von in etwa 10 cm bis in etwa 14cm, vorzugsweise in etwa 12cm liegen.

Ein Aspekt der Erfindung betrifft eine Verbindungsmuffen-Baugruppe, insbesondere Reparatur-Kit, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend: eine Verbindungsmuffe mit zwei Gehäusehälften gemäß einem oder mehreren der hierin beschriebenen Erfindungsaspekte und/oder Ausführungsbeispiele, die mittels einer oder mehrere Verbindungsklammern, insbesondere einer Schubklemmhülsen, gemäß einem oder mehreren der hierin beschriebenen Erfindungsaspekte und/oder Ausführungsbeispiele, verspannbar sind; einen Mikrorohreinsatz gemäß einem oder mehreren der hierin beschriebenen Erfindungsaspekte und/oder Ausführungsbeispiele, und/oder ein Dichtmittel gemäß einem oder mehreren der hierin beschriebenen Erfindungsaspekte und/oder Ausführungsbeispiele, die zwischen den Gehäusehälften einschließbar sind, insbesondere kraftschlüssig und/oder formschlüssig.

Die Verbindungsmuffen-Baugruppe kann auch als Reparatur-Kit bezeichnet werden. Im Unterschied zu einer Verbindungsmuffe, kann eine Verbindungsmuffen-Baugruppe die Verbindungsmuffe in montiertem Zustand bezeichnen, beispielsweise wenn der Mikrorohreinsatz und/oder das Dichtmittel (sowie das, insbesondere defekte, Mikrorohr und/oder die Mikrorohrendstücke) darin eingeschlossen sind. Mittels der Verbindungsmuffe und/oder der Verbindungsmuffen-Baugruppe können, insbesondere defekte, Mikrorohre repariert werden. Beispielsweise können strukturell und/oder funktionell beeinträchtigte, beschädigte und/oder kaputte Mikrorohre, die z.B. physische Beeinträchtigungen wie Risse, Löcher, Brüche, und/oder Verformungen, Unterbrechungen und/oder Materialfehler aufweisen, mittels der Verbindungsmuffen-Baugruppe repariert werden, beispielsweise also deren Struktur und/oder Funktion wiederhergestellt werden. Die Verbindungsmuffen-Baugruppe schützt auch vor Verunreinigungen und/oder anderen Einflüssen, die beispielsweise zu verschlechterten Eigenschaften der Mikrorohre und/oder der darin anordenbaren Glasfasern führen können, wie z.B. optischen und/oder strukturellen Eigenschaften, die zu einer verschlechterten Funktionalität, Datenverlusten und/oder einer gestörten Signalübertragung bzw. verminderter Leistung führen können.

Bei der Verbindungsmuffen-Baugruppe, insbesondere dem Reparatur-Kit, kann der Mikrorohreinsatz zwischen Mikrorohrendstücken des, insbesondere defekten, Mikrorohrs, angeordnet sein. Beispielsweise kann der Mikrorohreinsatz durch die wenigstens eine Sollbruchstelle an den Abstand zwischen den Mikrorohrendstücken angepasst worden sein. Das Dichtmittel kann den Mikrorohreinsatz und/oder das, insbesondere defekte, Mikrorohr, insbesondere im Wesentlichen vollständig, umhüllen, insbesondere abdichten. Der wenigstens eine Vorsprung, insbesondere der Mitnehmervorsprung, des Dichtelements, kann, in einem zusammengebauten Zustand, an einem der Auflagevorsprünge des halbschalenförmigen Abschnitts anliegen. Diese können insbesondere kraftschlüssig miteinander verbunden sein, beispielsweise durch einen Anpressdruck der Verbindungsmuffe, insbesondere der beiden Gehäusehälften.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### KURZBESCHREIBUNG DER ZEICHNUNGEN

Ausführungsbeispiele der Erfindung werden nun unter Bezugnahme auf die beigefügten Zeichnungen beschrieben. Damit die oben genannten Merkmale der vorliegenden Offenbarung im Detail verstanden werden können, kann eine detailliertere Beschreibung der Offenbarung, die oben kurz zusammengefasst wurde, durch Bezugnahme auf Ausführungsbeispiele erhalten werden. Die begleitenden Zeichnungen beziehen sich auf Ausführungsformen der Offenbarung und werden im Folgenden beschrieben:
- Fig. 1A: zeigt einen Mikrorohreinsatz zum Verbinden von Mikrorohrendstücken eines defekten, insbesondere unterbrochenen, Mikrorohrs oder zweier verschiedener Mikrorohre;
- Fig. 1B: zeigt eine Querschnittsansicht des Mikrorohreinsatz aus Fig. 1A;
- Fig. 2A: zeigt ein Dichtmittel für eine Verbindungsmuffe, insbesondere eine Halbschalenverbindungsmuffe, zum Abdichten eines, insbesondere defekten, Mikrorohrs, insbesondere von Mikrorohrendstücken eines defekten, insbesondere unterbrochenen, Mikrorohrs oder zweier verschiedener Mikrorohre;
- Fig. 2B: zeigt das Dichtmittel der Fig. 2A im Querschnitt;
- Fig. 2C: zeigt das Dichtmittel der Fig. 2A-B in das zwei Mikrorohrendstücke eingelegt sind;
- Fig. 2D: zeigt das Dichtmittel der Fig. 2A-C in einem Zustande, in dem es die zwei Mikrorohrendstücke und die dazwischenliegenden Glasfasern umhüllt;
- Fig. 2E: zeigt das Dichtmittel der Fig. 2D im Querschnitt;
- Fig. 2F: zeigt eine strukturierte Oberfläche des Dichtmittels der Fig. 2D;
- Fig. 3A: zeigt eine Seite, beispielsweise eine Innenseite, insbesondere eine dem, insbesondere defekten, Mikrorohr zugewandten bzw. zuzuwendenden Seite, einer Gehäusehälfte, beispielsweise einer oberen Gehäusehälfte, einer Verbindungsmuffe;
- Fig. 3B: zeigt eine Seitenansicht der Gehäusehälfte aus Fig. 3A;
- Fig. 3C: zeigt einen Querschnitt der Gehäusehälfte gemäß der Fig. 3A-B;
- Fig. 3D: zeigt eine andere Seite, beispielsweise eine Außenseite, insbesondere eine dem, insbesondere defekten, Mikrorohr abgewandten und/oder der Innenseite gegenüberliegenden Seite, der Gehäusehälfte gemäß der Fig. 3A-C;
- Fig. 4A: zeigt eine Seite, beispielsweise eine Innenseite, insbesondere eine dem, insbesondere defekten, Mikrorohr zugewandten bzw. zuzuwendenden Seite, einer Gehäusehälfte, beispielsweise einer unteren Gehäusehälfte, einer Verbindungsmuffe;
- Fig. 4B: zeigt eine Seitenansicht der Gehäusehälfte aus Fig. 4A;
- Fig. 4C: zeigt einen Querschnitt der Gehäusehälfte gemäß der Fig. 4A-B;
- Fig. 4D: zeigt eine andere Seite, beispielsweise eine Außenseite, insbesondere eine dem, insbesondere defekten, Mikrorohr abgewandten und/oder der Innenseite gegenüberliegenden Seite, der Gehäusehälfte gemäß der Fig. 4A-C;
- Fig. 5A: zeigt eine Seite, beispielsweise eine Innenseite, insbesondere eine den Gehäusehälften und/oder der Verbindungsmuffe zugewandten bzw. zuzuwendenden Seite, einer Verbindungsklammer, insbesondere einer Schubklemmhülse;
- Fig. 5B: zeigt eine Seitenansicht der Verbindungsklammer, insbesondere der Schubklemmhülse aus Fig. 5A;
- Fig. 5C: zeigt einen Querschnitt der der Verbindungsklammer, insbesondere der Schubklemmhülse, gemäß der Fig. 5A-B;
- Fig. 5D: zeigt eine andere Seite, beispielsweise eine Außenseite, insbesondere eine den Gehäusehälften und/oder der Verbindungsmuffe abgewandten und/oder der Innenseite gegenüberliegenden Seite, Verbindungsklammer, insbesondere der Schubklemmhülse, gemäß der Fig. 5A-C;
- Fig. 6A: zeigt die einzelnen Komponenten einer Verbindungsmuffe, insbesondere eine Verbindungsmuffen-Baugruppe, insbesondere eines Reparatur-Kits, als Explosionszeichnung;
- Fig. 6B: zeigt eine Verbindungsmuffe, insbesondere eine Verbindungsmuffen-Baugruppe, insbesondere das Reparatur-Kit, gemäß Fig. 6A in einen zusammengebauten Zustand;
- Fig. 6C: zeigt eine Seitenansicht von wenigstens einem Arretierelement;
- Fig. 6D: zeigt eine Querschnittsansicht des Arretierelements aus Fig. 6C; und
- Fig. 6E: zeigt eine perspektivische Ansicht des Arretierelements aus Fig. 6C bzw. 6E.

### BESCHREIBUNG BEVORZUGTER AUSFÜHRUNGSFORMEN

Im Folgenden soll die Erfindung anhand von in den Zeichnungen dargestellten Ausführungsformen näher erläutert werden, wobei in sämtlichen Zeichnungen im Wesentlichen funktionsgleiche Elemente die gleichen Bezugszeichen haben.

Die Zeichnungen sind schematische Zeichnungen, die nicht maßstabsgetreu sind. Einige Elemente in den Zeichnungen können übertriebene Abmessungen aufweisen, um Aspekte der vorliegenden Offenbarung zu betonen und/oder für eine bessere Präsentationsklarheit. Zur Vereinfachung werden identische Bezugszeichen verwendet, um identische Elemente zu kennzeichnen, die in den Zeichnungen gemeinsam enthalten sind. Es ist vorgesehen, dass Elemente und Merkmale einer Ausführungsform vorteilhaft in andere Ausführungsformen ohne weitere Erwähnung eingebaut werden können. Im Allgemeinen werden nur die Unterschiede bezüglich individueller Ausführungsformen beschrieben.

Jedes Ausführungsbeispiel dient zur Erläuterung der Offenbarung und soll nicht als Beschränkung der Offenbarung verstanden werden. Darüber hinaus können Merkmale, die als Teil einer Ausführungsform dargestellt oder beschrieben werden, in Verbindung mit anderen
Ausführungsformen verwendet werden, um eine weitere Ausführungsform zu erzeugen. Es ist beabsichtigt, dass die Beschreibung solche Modifikationen und Variationen einschließt.

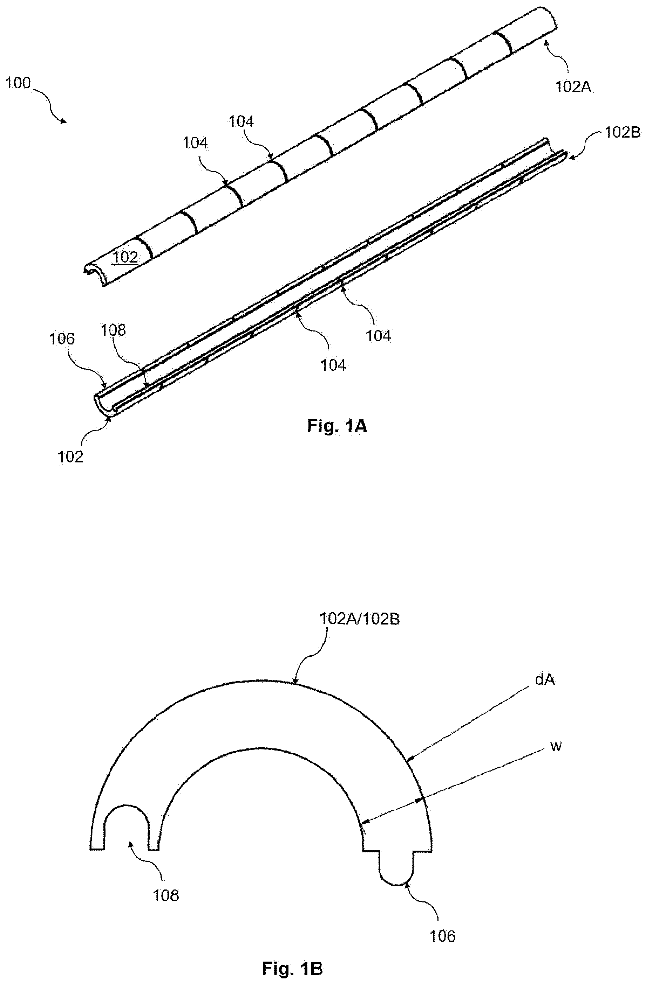

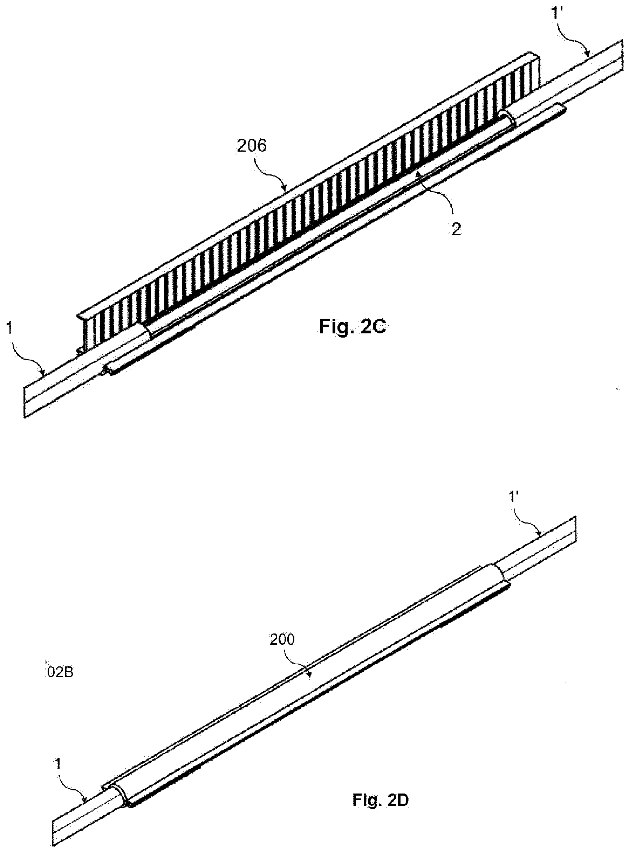

Fig. 1A zeigt eine einen Mikrorohreinsatz 100 zum Verbinden von Mikrorohrendstücken eines defekten, insbesondere unterbrochenen, Mikrorohrs oder zweier verschiedener Mikrorohre (s. z.B. Fig. 2C). Der Mikrorohreinsatz 100 kann einen im Wesentlichen länglichen Einsatzkörper 102 zur Anordnung zwischen den Mikrorohrendstücken umfassen, wobei der im Wesentlichen längliche Einsatzkörper 102 wenigstens eine Sollbruchstelle 104 zum definierten Abtrennen eines Abschnitts des Einsatzkörpers umfassen kann, die eingerichtet ist, eine Länge L des Einsatzkörpers 102 an einen Abstand zwischen den Mikrorohrendstücken anzupassen. In Fig. 1A sind beispielhaft mehrere Sollbruchstellen 104 gezeigt, mittels derer die Länge des Mikrorohreinsatzes 100 genauer anpassbar ist, wobei die Abstände und/oder die Anzahl der Sollbruchstellen variabel sein kann. Eine Länge des Einsatzkörpers 102 kann beispielsweise vordefiniert sein und in einem Bereich von in etwa 15 bis in etwa 25 cm, vorzugsweise in etwa 18 cm bis in etwa 22 cm liegen, insbesondere in etwa 20 cm aufweisen.

Der im Wesentlichen längliche Einsatzkörper kann zylinderförmig, beispielsweise hohl-zylinderförmig, und/oder rohrförmig ausgebildet sein, insbesondere aus zwei Halbschalen 102A, 102B, wie in Fig. 1A dargestellt, also z.B. zweiteilig aufgebaut sein. Die Halbschalen 102A, 102B können einen im Wesentlichen runden Querschnitt aufweisen, beispielsweise mit einer Durchgangsöffnung, die sich z.B. durch den im Wesentlichen länglichen Einsatzkörper 102 erstreckt. Eine von einem runden Querschnitt abweichende Form ist ebenfalls denkbar, beispielsweise eckig, z.B. solange der Einsatzkörper 102 in der Lage ist, die Glasfasern zu umgeben. Insbesondere können die zwei Halbschalen 102A, 102B eingerichtet sein, zwischen den Mikrorohrendstücken verlaufende Glasfasern, einzuschließen, insbesondere zu umhüllen, insbesondere formschlüssig und/oder kraftschlüssig, beispielsweise in der durch diese gebildeten Durchgangsöffnung. Die Durchgangsöffnung kann einen im Wesentlichen konstanten Querschnitt, beispielsweise in Längsrichtung des Einsatzkörpers 102, aufweisen. Die Halbschalen 102A, 102B können z.B. über eine Steckverbindung, z.B. durch einen Vorsprung, beispielsweise einen Steg 106 bzw. Vorsprung und eine Aussparung 108 bzw. Ausnehmung, beispielsweise eine Rille 106 oder Nut 108, an den Montageflächen aneinander befestigbar sein, beispielsweise formschlüssig und/oder kraftschlüssig. Der Steg 106 und die Nut 108 können beispielsweise an den Montageflächen ausgebildet sein und sich beispielsweise entlang der Montageflächen erstrecken, z.B. abschnittsweise oder vollständig. Die Halbschalen 102A, 102B, wie in Fig. 1A und 1B zu erkennen, können einen Wandstärke w aufweisen, die im Wesentlichen einer Wandstärke bzw. Nennwandstärke eines Mikrorohrs entspricht. Die Halbschalen 102A, 102B können einen Außendurchmesser dA aufweisen, der im Wesentlichen einem Außendurchmesser des Mikrorohrs entspricht (hierzu sei auf obige Tabelle verwiesen).

Der im Wesentlichen längliche Einsatzkörper 102 kann aus einem Polymer, beispielsweise Polyethylen, hergestellt ist. Die Sollbruchstelle 104 kann ermöglichen, dass der Einsatzkörper 102 gezielt und/oder definiert an einen Abstand zwischen den Mikrorohrendstücken anpassbar ist. Im Beispiel der Fig. 1A ist die Sollbruchstelle als Perforation, insbesondere als Bereich geringerer Dicke ausgestaltet, insbesondere als Kerbe 104 um eine Schwachstelle zu erzeugen, die bei gezielter Belastung oder Beanspruchung leichter bricht oder reißt. Die Sollbruchstelle kann quer zur Längsrichtung des Einsatzkörpers 102 verlaufen und sich z.B. über die gesamte Außenseite der Halbschalen 102A, 102B erstrecken. In dem Beispiel der Fig. 1A sind die Sollbruchstellen gleichmäßig beabstandet, beispielsweise mit einem Abstand in einem Bereich von in etwa 10 mm bis 30 mm, insbesondere in etwa 15 mm bis 25 mm, vorzugsweise in etwa 18 mm bis 22 mm, am bevorzugtesten in etwa 20 mm; beispielsweise können die Abstände in etwa 19,5 mm bzw. 19, 75 mm betragen. Andere Abstände, z.B. auch unterschiedliche bzw. variierende Abstände sind auch denkbar.

Wie in der vergrößerten Fig 1B deutlicher zu erkennen, können die Halbschalen 102A und/oder 102B eine Art Steck- und/oder Klippverbindung ausbilden, mittels derer die Halbschalen 102A und 102B aneinander befestigbar sind, insbesondere kraft- und/oder formschlüssig. Diese kann beispielsweise über den Steg 106, der z.B. einem männlichen Steckelement 110A (z.B. in Form eines Steckers) entsprechen kann, und über die Aussparung 108, die z.B. einem weiblichen Steckelement (z.B. einer Art länglichen Buchse/Hülse) entsprechen kann, realisiert sein Diese Steck- und/oder Klippverbindung kann eine Befestigung des im Wesentlichen längliche Einsatzkörper 102 erleichtern und/oder eine, insbesondere temporäre, Fixierung bereitstellen, was die Montage erleichtern kann.

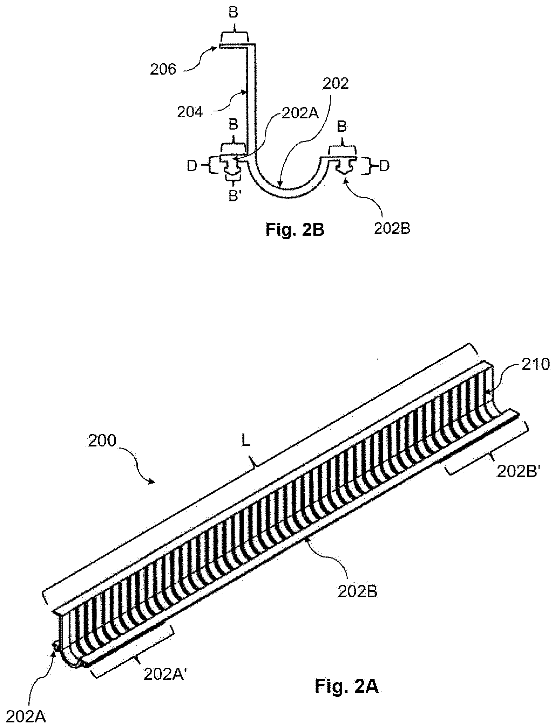

Fig. 2A zeigt ein Dichtmittel 200 für eine Verbindungsmuffe, insbesondere eine Halbschalenverbindungsmuffe, zum Abdichten eines, insbesondere defekten, Mikrorohrs, insbesondere von Mikrorohrendstücken eines defekten, insbesondere unterbrochenen, Mikrorohrs oder zweier verschiedener Mikrorohre. Das Dichtmittel 200 kann eingerichtet sein, das, insbesondere defekte, Mikrorohr gas- und/oder wasserdicht abzudichten. Das Dichtmittel 200 kann auch vor Staub bzw. Schmutz, vor Chemikalien und/oder anderen Materialien/ Stoffen und/oder Einflüssen schützen, welche die Struktur und/oder die Funktion des Mikrorohres negativ beeinflussen kann. Das Dichtmittel 200 kann aus verschiedenen Materialein hergestellt sein, beispielsweise eines oder mehrere von: Kunststoff, einem Elastomer-Material, Gummi, flexible Polymere, Epoxidharz, Polyurethan, und/oder thermoplastische Elastomere.

Wie in den Fig. 2A-B erkennbar, kann das erfindungsgemäße Dichtmittel 200 eine spezifische Form und/oder Geometrie aufweisen. Beispielsweise kann das Dichtmittel einen halbschalenförmigen Abschnitt 202 aufweisen, an dessen Enden, insbesondere dessen Umfangsenden, sich Auflagevorsprünge 202A, 202B erstrecken, insbesondere zum Eingriff mit einer Gehäusehälfte der Verbindungsmuffe. Ferner kann das Dichtmittel 200 einen, insbesondere im Wesentlichen geradlinigen, Mikrorohr-Umhüllungsabschnitt 204 aufweisen, der an dem halbschalenförmigen Abschnitt 202, insbesondere an einem der Auflagevorsprünge, z.B. dem Auflagevorsprung 202A, anschließt.

Wie in Fig. 2A erkennbar, kann das Dichtmittel 200 beispielsweise in axialer Richtung bzw. Längsrichtung des, insbesondere defekten, Mikrorohrs z.B. im Wesentlichen länglich ausgestaltet sein. Eine Länge L des Dichtmittels 200, insbesondere in Längsrichtung des, insbesondere defekten, Mikrorohrs, kann im Wesentlichen einer Länge der Verbindungsmuffe entsprechen. Das Dichtmittel kann eingerichtet, das, insbesondere defekte, Mikrorohr wenigstens abschnittsweise, z.B. in Längsrichtung des, insbesondere defekten, Mikrorohrs, im Wesentlichen vollständig zu umhüllen, insbesondere umfänglich und/oder radial.

Die Auflagevorsprünge 202A, 202B können sich beispielsweise in radialer Richtung des Dichtmittels 200 bzw. des, insbesondere defekten, Mikrorohrs erstrecken, also z.B. im Wesentlichen senkrecht an die Umfangsenden des halbschalenförmigen Abschnitts 202 anschließen. Beispielsweise können die Auflagevorsprünge eine Breite B in einem Bereich von in etwa 2-7 mm, vorzugsweise 3-6 mm, besonderes bevorzugt in etwa 3,5-5 mm aufweisen, beispielsweise in etwa 4 mm. Die Auflagevorsprünge 202A, 202B können sich entlang der Längsrichtung des, insbesondere defekten, Mikrorohrs, im Wesentlichen über die gesamte Länge L des Dichtelements 200 und/oder der Verbindungsmuffe erstrecken, wie beispielsweise in Fig. 2A zu sehen. Der halbschalenförmige Abschnitt 202 kann mit dem Mikrorohr-Umhüllungsabschnitt 204, insbesondere fest, vorzugsweise stoffschlüssig, verbunden sein. Vorzugsweise sind der halbschalenförmige Abschnitt und der Mikrorohr-Umhüllungsabschnitt aus einem Stück ausgebildet, d.h. einstückig.

Wie in Fig. 2B zu sehen, kann das Dichtmittel 200 einen im Wesentlichen J-förmigen Querschnitt aufweisen. Beispielsweise kann der Mikrorohr-Umhüllungsabschnitt 204 den geraden Abschnitt des "J" darstellen, der in den gekrümmten/gebogenen Abschnitt 202 mündet, der durch den halbschalenförmigen Abschnitt 202 des Dichtmittels 200 gebildet wird. Der Mikrorohr-Umhüllungsabschnitt 204 kann eine Länge aufweisen, die so dimensioniert ist, dass sie wenigstens den Abschnitt des Mikrorohrs bedecken kann, insbesondere vollständig, der nicht (bereits) von dem halbschalenförmigen Abschnitt 202 bedeckt wird. Beispielsweise kann eine Länge des, insbesondere im Wesentlichen geradlinigen, Mikrorohr-Umhüllungsabschnitts 204 auf einen Umfang, insbesondere eine Umfangslänge, des, insbesondere defekten, Mikrorohrs bzw. der Mikrorohrendstücke, abgestimmt sein. Die Länge des, insbesondere im Wesentlichen geradlinigen, Mikrorohr-Umhüllungsabschnitts kann auch auf einen Durchmesser des insbesondere defekten, Mikrorohrs, bzw. der Mikrorohrendstücke, abgestimmt sein (hierzu sei auf obige Tabelle verwiesen).

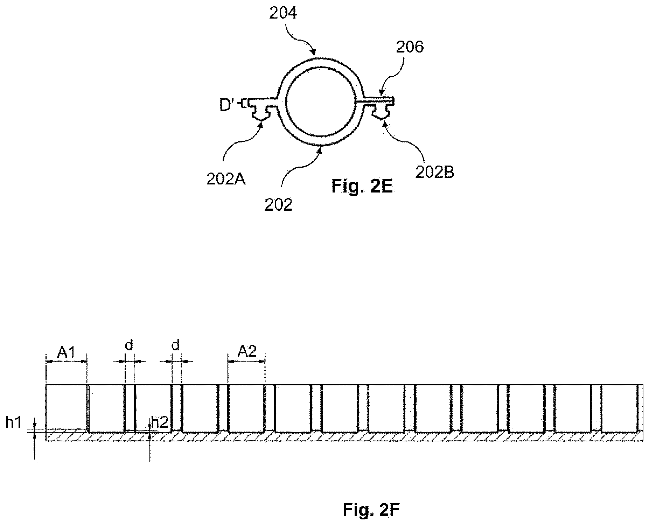

Die Auflagevorsprünge 202A, 202B können eine unterschiedliche und/oder variierende Dicke aufweisen, insbesondere kann eine Dicke D der Auflagevorsprünge, insbesondre in der Längsrichtung des, insbesondere defekten, Mikrorohrs wenigstens abschnittsweise variieren, beispielsweise schrittweise und/oder stufenweise. Auch eine allmähliche bzw. kontinuierliche Dickenänderung ist denkbar. Beispielsweise kann eine Dicke D der Auflagevorsprünge 202A, 202B in Endbereichen des Dichtmittels 200, was in Fig. 2A beispielsweise durch die Bereiche bzw. Längen 202A' und 202B' angedeutet ist, größer sein, als eine Dicke der Auflagevorsprünge zwischen den Endbereichen 202A', 202B' des Dichtmittels 200. Eine Dicke D der Auflagevorsprünge 202A, 202B in den Endbereichen 202A', 202B' des Dichtmittels 200 kann beispielsweise in etwa wenigstens doppelt so groß oder in etwa dreimal so groß sein, wie eine Dicke D' (vgl. Fig. 2E für die Dicke D') der Auflagevorsprünge 202A, 202B zwischen den Endbereichen 202A', 202B'. Beispielsweise kann die Dicke D der Auflagevorsprünge 202A, 202B in den Endbereichen 202A', 202B' in etwa 3 mm betragen, während die Dicke D' der der Auflagevorsprünge 202A, 202B zwischen den Endbereichen 202A', 202B' beispielsweise in etwa 1 mm betragen kann. Eine Länge der Endbereiche 202A', 202B', in denen die Dicke D der Auflagesprünge 202A, 202B erhöht ist, kann beispielsweise in einem Bereich von in etwa 2-7 cm, vorzugsweise 3-6 cm, am bevorzugtesten 4-5 cm betragen, beispielsweise in etwa 4,5 cm.

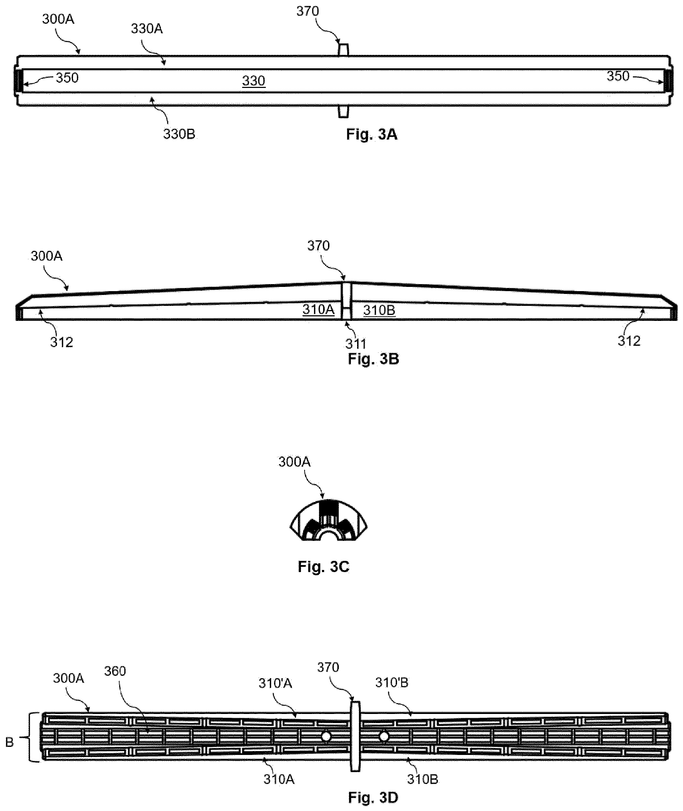

Alternativ oder zusätzlich können die Auflagevorsprünge 202A, 202B, wie in Fig. 2B bzw. Fig. 2E gezeigt, eine spezifische Form aufweisen, beispielsweise eine Pfeilform, die eingerichtet ist, mit wenigstens einer Vertiefung, beispielsweise einer Rille oder Nut, in einer Gehäusehälfte (s. z.B. Fig. 3A-4D) einzugreifen, insbesondere damit zu verhaken. Die spezifische Form bzw. die variierende Dicke D der Auflagevorsprünge 202A, 202B kann für eine zusätzliche Fixierung sorgen, beispielsweise durch einen erhöhten Anpressdruck, der durch die Verbindungsmuffe erzeugt werden kann, was die Dichtigkeit des Dichtmittels 200 innerhalb der Verbindungsmuffe verbessern kann. Die Pfeilspitze (des Auflagevorsprungs 202A und/oder des Auflagevorsprungs 202B), wie in Fig. 2B dargestellt, kann eine beispielhafte Breite B' in einem Bereich von in etwa 2-2,5 mm aufweisen, vorzugsweise in etwa 2,3 mm.

An einem Ende des, insbesondere im Wesentlichen geradlinigen, Mikrorohr-Umhüllungsabschnitts 204 kann wenigstens ein Vorsprung 206, insbesondere ein Mitnehmervorsprung 206, ausgebildet sein, insbesondere zum Eingriff, insbesondere zum Einhaken, Greifen, und/oder Einrasten, mit einer anderen Gehäusehälfte der Verbindungsmuffe (s. z.B. Fig. 3A-4D). Der Mitnehmervorsprung 206 kann im Wesentlichen die gleiche Breite B aufweisen, wie die Breite B der Auflagevorsprünge 202A, 202B und/oder sich radial nach außen erstrecken. Andere Breiten sind jedoch ebenfalls denkbar. Der Mitnehmervorsprung 206 kann wenigstens so bemessen sein, dass er eingerichtet ist, an einer Gehäusehälfte einzuhaken und eine Kraft, ein Drehmoment und/oder eine Bewegung der Verbindungsmuffe, beispielsweise bei der Montage, insbesondere beim Einschließen des Dichtmittels, auf den Mikrorohr-Umhüllungsabschnitt 204 zu übertragen, um diesen an dem, insbesondere defekten, Mikrorohr zu befestigen, zu halten, anzubringen und/oder anzulegen.

Wie in Fig. 2C-E zu erkennen, kann eine Länge des, insbesondere im Wesentlichen geradlinigen, Mikrorohr-Umhüllungsabschnitts 204 auf einen Umfang, insbesondere eine Umfangslänge, des, insbesondere defekten, Mikrorohrs 1, 1' bzw. der Mikrorohrendstücke 1, 1', abgestimmt sein. Wie in Fig. 2C zu erkennen ist, können Glasfasern 2 zwischen den Mikrorohrendstücken 1, 1' verlaufen. Die Länge des, insbesondere im Wesentlichen geradlinigen, Mikrorohr-Umhüllungsabschnitts 204 kann derart vorgesehen sein, um, z.B. in einem verbauten Zustand (s. z.B. Fig. 2D-E), einen Eingriff zwischen dem wenigstens einen Vorsprung 206, insbesondere dem Mitnehmervorsprung 206, des, insbesondere im Wesentlichen geradlinigen, Mikrorohr-Umhüllungsabschnitts 204, mit einem anderen der Auflagevorsprünge, beispielsweise den Auflagevorsprung 202B, des halbschalenförmigen Abschnitts 202, zu ermöglichen (s. z.B. Fig. 2E). Beispielsweise kann, wie in Fig. 2E zu erkennen, in einem montierten Zustand der Mitnehmervorsprung 206 an wenigstens einem der Auflagevorsprünge 202B, insbesondere dichtend, anliegen. Dies kann die Dichtigkeit des Dichtmittels innerhalb der Verbindungsmuffe weiter verbessern, da Mitnehmervorsprung 206 und Auflagevorsprung 202B durch eine Anpresskraft, beispielsweise durch die Verbindungsmuffe, für eine erhöhte Dichtheit sorgen.

Wie in den Fig. 2A und 2C zu erkennen, kann der halbschalenförmige Abschnitt 202 und/oder der, insbesondere im Wesentlichen geradlinige, Mikrorohr-Umhüllungsabschnitt 204, eine strukturierte Oberfläche 210, insbesondere auf einer dem, insbesondere defekten, Mikrorohr 1, 1' zugewandten bzw. zuzuwendenden Seite, aufweisen. Beispielsweise kann die strukturierte Oberfläche 210 wenigstens eine Erhebung, insbesondere wenigstens eine Rippe, vorzugsweise eine Arretier-Rippe, aufweisen (dargestellt durch die gestreifte Innenfläche), die eingerichtet ist, an einem der Mikrorohrendstücke 1, 1' (oder an beiden) des, insbesondere defekten, Mikrorohrs, anzugreifen, insbesondere um eine Position des Dichtmittels 200 zu fixieren. Bevorzugt können mehrere Arretier-Rippen vorhanden sein, die vorzugsweise im Wesentlichen gleichmäßig über die Länge des Dichtmittels angeordnet bzw. verteilt sind. In Fig. 2F ist eine strukturierte Oberfläche in Form von beispielhaften Arretier-Rippen zu erkennen. Beispielhafte Abstände A1 bzw. A2 können in einem Bereich von in etwa 3-6 mm, beispielsweise in etwa 4-4,8 mm, insbesondere in etwa 4 mm (z.B. A2), bzw. in etwa 4,4 mm (z.B. A1) liegen, oder mehr bzw. weniger. Die Erhebungen, beispielsweise die Rippen können eine beispielhafte Dicke d von in etwa 1 mm aufweisen, wobei auch andere Dicken d denkbar sind. Eine Höhe der Erhebung kann so dimensioniert sein, um wenigstens mit wenigstens einem Mikrorohrendstück eingreifen zu können. Die Erhebungen können eine Höhe in einem Bereich von in etwa 0,1 mm bis in etwa 0,4 mm, insbesondere in etwa 0,2 mm (z.B. h2) bis in etwa 0,35 mm (z.B. h1) aufweisen. Es ist denkbar, dass die Erhebungen, unterschiedliche Abstände A1/A2, Dicken d und/oder Höhen h1/h2 aufweisen. Auch kann eine erste Erhebung einen anderen Abstand A1/A2, Dicke d und/oder Höhe h1/h2 aufweisen als eine zweite Erhebung. Auch verschiedene Kombinationen sind denkbar. Es können auch alle Erhebungen die im Wesentlichen gleichen Abstände, Dicken und/oder Höhen aufweisen. Alternativ oder zusätzlich sind nicht geradlinig verlaufende, beispielsweise schräge, Erhebungen denkbar. Die strukturierte Oberfläche 210 kann die Position des Dichtmittels 200 an dem, insbesondere defekten, Mikrorohr sichern und z.B. gegen Verschiebungen, Stöße und/oder andere Einflüsse sichern, was die Zuverlässigkeit verbessern kann. Die strukturierte Oberfläche 210 und/oder die wenigstens eine Erhebung kann sich wenigstens abschnittsweise, vorzugsweise komplett, über eine Breite und/oder Länge der dem, insbesondere defekten, Mikrorohr zugewandten bzw. zuzuwendenden Seite, insbesondere der Innenseite des halbschalenförmigen Abschnitts 202 und/oder des, insbesondere im Wesentlichen geradlinigen, Mikrorohr-Umhüllungsabschnitts 204 erstrecken.

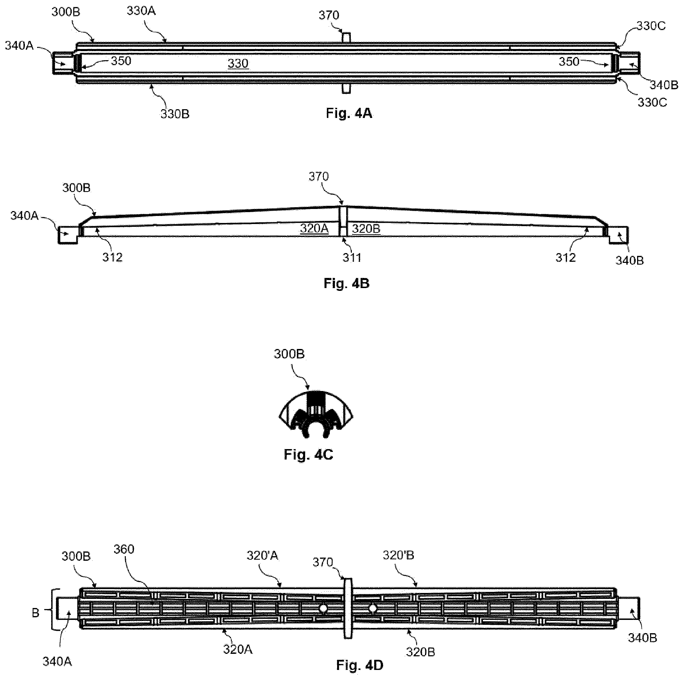

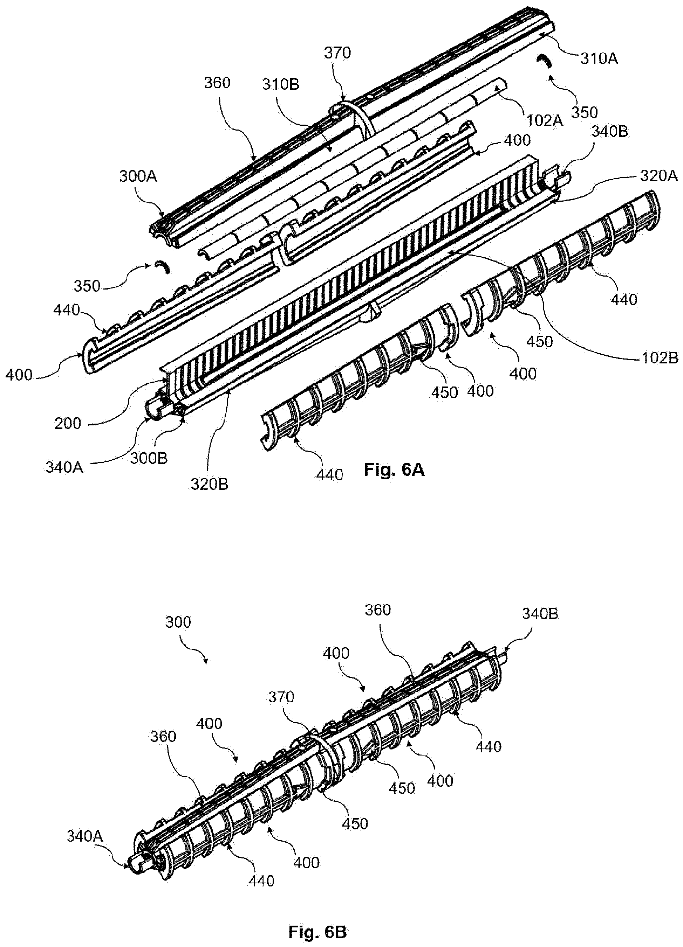

Die Fig. 3A-D und Fig. 4A-D zeigen beispielhafte Gehäusehälften 300A, 300B, z.B. eine oberer Gehäusehälfte 300A (s. Fig. 3A-D) und eine untere Gehäusehälfte 300B (s. Fig. 4A-4D) einer Verbindungsmuffe 300, insbesondere einer Halbschalenverbindungsmuffe 300, und/oder einer Verbindungsmuffen-Baugruppe 300, beispielsweise gemäß Fig. 6A-6B, für ein, insbesondere defektes, Mikrorohr, bereitgestellt, die eingerichtet sein kann zum Verbinden von Mikrorohrendstücken 1, 1' (s. z.B. Fig. 2C) eines defekten, insbesondere unterbrochenen, Mikrorohrs oder zweier verschiedener Mikrorohre.

Die Verbindungsmuffe 300 kann zwei Gehäusehälften 300A, 300B umfassen, insbesondere zwei Halbschalenhülsen 300A, 300B, die, in einem montierten Zustand aneinander anliegen und/oder aufeinandergesetzt sind. Die Verbindungsmuffe 300 kann im montierten Zustand (s. z.B. Fig. 6B) im Wesentlichen zylinderförmig, beispielsweise hohl-zylinderförmig, und/oder im Wesentlichen rohrförmig ausgebildet sein. Die zwei Gehäusehälften 300A, 300B, insbesondere Halbschalenhülsen 300A, 300B, können ausgestaltet sein ein Dichtmittel 200, insbesondere gemäß einem oder mehreren der hierin beschriebenen Erfindungsaspekte und/oder Ausführungsbeispiele, und/oder einen Mikrorohreinsatz 100, gemäß einem oder mehreren der hierin beschriebenen Erfindungsaspekte und/oder Ausführungsbeispiele, aufzunehmen und/oder darin einzuschließen. Es sei klar, dass auch das, insbesondere defekte, Mikrorohr bzw. die Mikrorohrendstücke 1, 1' in der Verbindungsmuffe 300 aufgenommen werden.

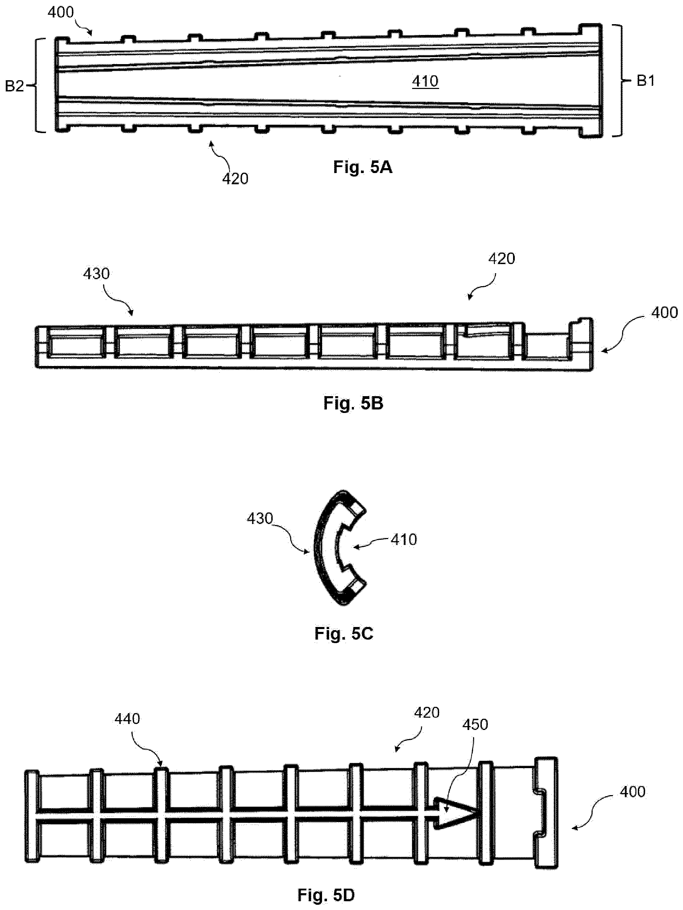

Die Gehäusehälften 300A, 300B können mittels einer oder mehrerer Verbindungsklammern (s. Fig. 5A-D), insbesondere Schubklemmhülsen, insbesondere gemäß einem oder mehreren der hierin beschriebenen Erfindungsaspekte und/oder Ausführungsbeispiele, insbesondere über Schwalbenschwanz-Führungen, gegeneinander verspannbar sein.

Beispielsweise kann die Verbindungsmuffe 300 und/oder die Gehäusehälften 300A, 300B, insbesondere an einer Außenseite, eine oder mehrere Leisten 310A-B, 320A-B (s. z.B. Fig. 3B, 4B), insbesondere Führungsleisten, vorzugsweise für die hierin beschriebenen Verbindungsklammern, insbesondere die Schubklemmhülsen, aufweisen und/oder ausbilden. Die eine oder die mehreren Leisten 310A-B, 320A-B können z.B. geneigt sein, insbesondere im Wesentlichen keilförmig, insbesondere schwalbenschwanzförmig, verlaufen, beispielsweise in Längsrichtung der Verbindungsmuffe 300 und/oder der Gehäusehälfte 300A, 300B. Beispielsweise können sich die eine oder die mehreren Leisten 310A-B, 320A-B von einem Mittelpunkt 311 der Verbindungsmuffe 300 und/oder der Gehäusehälfte 300A, 300B in Richtung der Endbereiche der Verbindungsmuffe verjüngen. In den Fig. 3B und 4B ist dies durch den Pfeil 312 angedeutet. Es sei klar, dass auf der der Leiste 310A-B, 320A-B gegenüberliegenden Seite der Gehäusehälfte 300A, 300B jeweils eine weitere, insbesondere gleich ausgebildete Leiste 310A-B', 320A-B' vorhanden sein kann (s. z.B. Fig. 3D und 4D). Vorzugsweise sind Leisten 310A-B, 320A-B (und 310'A-B, 320'A-B) an der Außenseite des Verbindungsmuffe 300 und/oder der Gehäusehälfte 300A, 300B vorgesehen, insbesondere an gegenüberliegenden Außenseiten und sind vorzugsweise im Wesentlichen identisch ausgestaltet. Die Leisten 310A-B, 320A-B können durch die beiden Gehäusehälften 300A, 300B ausgebildet sein, z.B. einstückig. Beispielsweise kann eine Gehäusehälfte, z.B. die Gehäusehälfte 300A einen Teil der Leiste 310A-B, z.B. die eine Hälfte der Leiste 310A-B, ausbilden und eine andere Gehäusehälfte, z.B. die Gehäusehälfte 300B, den anderen Teil, z.B. die andere Hälfte der Leiste 320A-320B, ausbilden. Durch Montage der Gehäusehälften 300A, 300B, insbesondere wenn diese aufeinandergesetzt werden, kann sich die endgültige Leiste ergeben, die mit einer Verbindungsklammer, insbesondere einer darin formkomplementär vorgesehenen Ausnehmung, insbesondere eine Nut, die ebenfalls im Wesentlichen keilförmig, insbesondere schwalbenschwanzförmig, ausgestaltet sein kann (s. Fig. 5A-d), eingreifen kann, um die Gehäusehälften 300A, 300B der Verbindungsmuffe 300 zu verspannen, insbesondere aneinander zu befestigen, vorzugsweise form- und/oder kraftschlüssig.

Die Gehäusehälften 300A, 300B, insbesondere Halbschalenhülsen, können aus einem Material hergestellt sein, dass eine Dichte von in etwa 1,07 g/m³, ein Elastizitätsmodul (E-Modul) von in etwa 1950 Mpa und/oder eine Zugfestigkeit von in etwa 1900 MPa aufweisen kann. Die Gehäusehälften 300A, 300B können, insbesondere in einem montierten Zustand, z.B. wenn die beiden Gehäusehälften aufeinander liegen, bzw. aufeinandergesetzt sind, einen Aufnahmebereich 330 aufweisen, definieren und/oder ausbilden, insbesondere eine Durchgangsöffnung 330, zur Aufnahme des, insbesondere defekten, Mikrorohrs bzw. von Mikrorohrendstücken 1, 1'. Beispielsweise kann in jeder Gehäusehälfte 300A, 300B eine halbzylinderförmige, halbschalenförmige und/oder halbrohrförmige Vertiefung 330 vorhanden sein, die insbesondere einen im Wesentlichen halbkreisförmigen Querschnitt aufweist. Durch Zusammensetzen der beiden Gehäusehälften 300A, 300B kann sodann eine im Wesentlichen zylinderförmige und/oder rohrförmige Durchgangsöffnung 330 ausgebildet werden. Die Durchgangsöffnung 330 kann einen im Wesentlichen konstanten Querschnitt, beispielsweise in Längsrichtung der Gehäusehälfte 300A, 300B, aufweisen.

An den Umfangsenden der halbschalenförmigen Vertiefung 330 einer oder beider der Gehäusehälften 300A, 300B können sich Montageflächen 330A, 330B anschließen, die sich insbesondere in radialer Richtung des, insbesondere defekten, Mikrorohrs erstrecken können, beispielsweise im Wesentlichen quer zur Längsrichtung der Gehäusehälfte 300A, 300B. Die beiden Gehäusehälften 300A, 300B können grundsätzlich gleich aufgebaut sein, wobei wenigstens eine der Gehäusehälften 300A, 300B, wenigstens eine Nut 330C, vorzugsweise wenigstens zwei Nuten 330C, zur Aufnahme und/oder zum Eingriff mit einem oder mehreren Auflagevorsprüngen 202A, 202B (s. z.B. Fig. 2A-B, E) des Dichtmittels 200.

Die eine oder die mehreren Nuten 330C können jeweils an einer oder mehreren Montageflächen 330A, 330B der Gehäusehälfte 300A, 300B angeordnet sein, beispielsweise an gegenüberliegenden Enden der Gehäusehälfte 300A, 300B, beispielsweise in quer zu deren Längsrichtung. Vorzugsweise weist jede Gehäusehälfte 300A, 300B zwei gegenüberliegende Montageflächen 330A, 330B auf, wobei eine der Gehäusehälften 300A, 300B in jeder der Montageflächen 330A, 330B eine zusätzliche Nut 330C aufweisen kann, die darin gebildet ist und/oder sich im Wesentlichen vollständig durch die Montagefläche(n) 330A, 330B erstreckt. Wie in Fig. 3A zu sehen, kann beispielsweise die obere Gehäusehälfte 300A frei von einer oder mehreren Nuten 330C sein, d.h. die Montageflächen 330A, 330B können als ebene Flächen, beispielsweise Anlageflächen ausgebildet sein, beispielsweise für die jeweils andere Gehäusehälfte, z.B. direkt, oder für die Auflagevorsprünge des Dichtmittels. Die untere Gehäusefläche 300B kann, wie in Fig. 4A zu sehen, jedoch zusätzliche Nuten 330C, beispielsweise in Form von Rillen, z.B. Eingriffsrillen, 330C aufweisen, die sich entlang und/oder innerhalb der Montageflächen 330A, 330B, insbesondere in Längsrichtung der Gehäusehälfte 300B erstrecken. Es sei klar, dass die Gehäusehälften 300A, 300B auch beide entsprechende Nuten 330C aufweisen können und/oder die Gehäusehälfte 300A anstelle der Gehäusehälfte 300B mit Nuten 330C versehen sein kann.

Die halbzylinderförmigen Durchgangsöffnungen 330 einer Gehäusehälfte können durch zwei optionale, halbzylinderförmige, halbschalenförmige und/oder halbrohrförmige Mikrorohranlageabschnitte (nicht dargestellt in Fig. 3A-D; vgl. 340A, 340B in Fig. 4A-D, 6B) zur Anlage und/oder zum Eingriff mit dem, insbesondere defekten Mikrorohr, bzw. den Mikrorohrendstücken 1, 1', begrenzt sein. Die Mikrorohranlageabschnitte können sich beispielsweise jeweils an den Endbereichen der Gehäusehälften 300A, 300B befinden und/oder durch die Gehäusehälften 300A, 300B ausgebildet sein. Diese sind jedoch optional, d.h. eine oder beide der Gehäusehälften 300A, 300B können, wie in den Fig. 3A-3D dargestellt auch ohne derartige Mikrorohranlageabschnitte auskommen bzw. ausgestaltet sein. Es sei klar, das auch beide Gehäusehälften 300A, 300B die Mikrorohranlageabschnitte umfassen bzw. ausbilden können. Die halbschalenförmigen Mikrorohranlageabschnitte können einen Aufnahmebereich, beispielsweise die Durchgangsöffnung 330, für das Dichtmittel gemäß einem oder mehreren der hierin beschriebenen Erfindungsaspekte und/oder Ausführungsbeispiele begrenzen. Die halbschalenförmigen Mikrorohranlageabschnitte können eine Mikrorohraufnahmeöffnung definieren und/oder ausbilden, die insbesondere die Montage an den, z.B., Mikrorohrendstücken 1, 1' erleichtern kann.

Der Innenquerschnitt einer durch die optionalen Mikrorohranlageabschnitte ausgebildeten Öffnung, insbesondere der Mikrorohraufnahmeöffnung, kann geringer sein, als die Außenabmessung des, insbesondere defekten, Mikrorohrs. Beispielsweise kann die Mikrorohraufnahmeöffnung in Bezug auf das, insbesondere defekte, Mikrorohr leicht unterdimensioniert sein, um eine, insbesondere formschlüssige, Fixierung an dem Mikrorohr bereitzustellen, was die Montage erleichtern kann. Die Durchgangsöffnung 330 kann einen größeren Durchmesser aufweisen als die Mikrorohraufnahmeöffnung(en), beispielsweise um Platz für das Dichtmittel 200 gemäß einem oder mehreren der hierin beschriebenen Erfindungsaspekte und/oder Ausführungsbeispiele bereitzustellen und/oder dieses aufnehmen und/oder darin einschließen zu können.

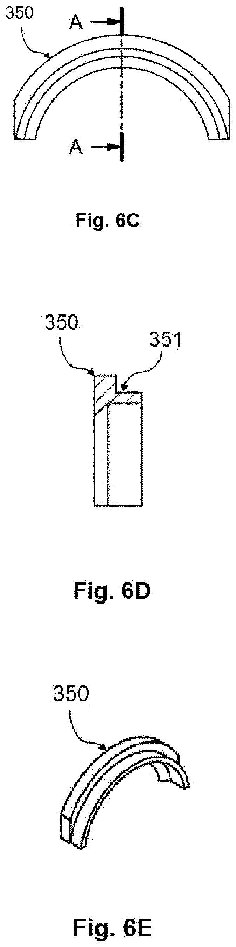

Wenigstens eine der Gehäusehälften 300 kann wenigstens ein Arretierelement 350 (s. z.B. Fig. 3A, Fig. 6A bzw. Fig. 6C-E) umfassen, das eingerichtet ist, an dem, insbesondere defekten, Mikrorohr und/oder den Mikrorohrendstücken 1, 1' anzugreifen, insbesondere damit zu verkeilen, insbesondere zu verkrallen, insbesondere zum Sichern einer Position und/oder Ausrichtung der Verbindungsmuffe 300 an dem, insbesondere defekten, Mikrorohr. Vorzugsweise können zwei Arretierelemente 350 vorgesehen sein, beispielsweise eines für jedes Mikrorohrendstück 1, 1'.

Fig. 6C zeigt eine Seitenansicht des Arretierelements 350. Fig. 6D zeigt eine Querschnittsansicht des Arretierelements 350 und Fig. 6E zeigt eine perspektivische Ansicht des Arretierelements 350.

Wie in den Fig. 6C-E deutlicher zu erkennen, kann das wenigstens eine Arretierelement 350 im Wesentlichen keilförmig ausgebildet sein, wobei auch andere Formen denkbar sind. Das wenigstens eine Arretierelement 350 kann auf einer, dem, insbesondere defekten, Mikrorohr zugewandten bzw. zuzuwendenden Seite, insbesondere einer Innenseite der wenigstens einen Gehäusehälfte 300A, 300B, angeordnet sein, beispielsweise, um damit einzugreifen, insbesondere sich damit zu verkeilen und/oder zu verkrallen. Die Form des wenigstens einen Arretierelements 350 kann einer Innenform der wenigstens einen Gehäusehälfte 300A, 300B entsprechen. Beispielsweise kann das wenigstens eine Arretierelement 350 im Wesentlichen halbschalenförmig ausgestaltet sein. Das wenigstens eine Arretierelement 350 kann wenigstens einen Befestigungsabsatz 351, z.B. in Form einer Stufe 351 umfassen. Das Arretierelement 350 kann entweder separat und/oder individuell von der Verbindungsmuffe 300 bzw. der Gehäusehälfte 300A, 300B ausgebildet sein, beispielsweise aus einem Metall, insbesondere einem nicht-rostenden Metall, vorzugsweise Edelstahl, hergestellt sein, oder aber einstückig mit der Verbindungsmuffe bzw. der Gehäusehälfte.

Das wenigstens eine Arretierelement 350 kann, als Beispiel, in einem halbschalenförmigen Mikrorohranlageabschnitt, der wenigstens einen Gehäusehälfte 300A, 300B angeordnet sein, insbesondere darin eingebettet sein, wobei der halbschalenförmige Mikrorohranlageabschnitt durch die wenigstens eine Gehäusehälfte 300A, 300B ausgebildet sein kann. Es ist jedoch ebenfalls denkbar, das Arretierelement 350 im Bereich der Durchgangsöffnung, beispielsweise in der Nähe des Mikrorohranlageabschnitts bzw. in der Nähe eines Endbereichs der Gehäusehälften, z.B. einem Endbereich in Längsrichtung der Gehäusehälften, anzuordnen, bzw. darin zu integrieren und/oder einzubetten.

Wie in den Figuren 3B, 4B und 6A zu erkennen ist, kann ein Winkel, insbesondere ein Keilwinkel, der Schwalbenschwanz-Führungen, beispielsweise der Leisten 310A-B, 310'A-B, 320A-B, 320'A-B, weniger als in etwa 3°, insbesondere weniger als in etwa 2°, vorzugsweise 1,5° betragen, was durch den Pfeil 312 angedeutet ist. Beispielsweise können die eine oder die mehreren Leisten 310A-B, 310'A-B, 320A-B, 320'A-B, sich unter einem Keilwinkel von in etwa 3°, insbesondere weniger als in etwa 2°, vorzugsweise 1,5° neigen, insbesondere verlaufen bzw. sich erstrecken. Beispielsweise können die eine oder die mehreren Leisten sich unter diesen Winkeln jeweils von einer Mitte 311 der Gehäusehälfte 300A, 300B bzw. der Verbindungsmuffe nach außen neigen, insbesondere verlaufen bzw. sich erstrecken. Dieser kleiner Winkelbereich ermöglicht eine einerseits stabile und andererseits einfache Befestigung der Verbindungsmuffe.

Wenigstens eine der Gehäusehälften 300A, 300B, insbesondere der Halbschalenhülsen, kann auf einer Außenseite der wenigstens einen Gehäusehälfte 300A, 300B, wenigstens eine Vertiefung, insbesondere eine Vertiefungsrippe, aufweisen. Vorzugsweise weist wenigstens eine, vorzugsweise beide, der Gehäusehälften 300A, 300B insbesondere der Halbschalenhülsen, eine Mehrzahl von Vertiefungen 360, insbesondere Vertiefungsrippen, auf. Die Vertiefungsrippen können eine Art Tasche 360 oder Hohlraum 360, insbesondere dazwischen, definieren und/oder begrenzen und die Stabilität der Verbindungsmuffe 300 und/oder der entsprechenden Gehäusehälfte 300A, 300B erhöhen können. Die Mehrzahl der Vertiefungsrippen 360 und/oder der dadurch gebildeten Taschen 360 und/oder Hohlräume 360 können insbesondere paarweise angeordnet sein und/oder im Wesentlichen rechteckig ausgestaltet sein und/oder unterschiedliche Tiefen aufweisen. Auch andere Formen als rechteckig sind denkbar, beispielsweise rundlich, blasenartig, sternartig, eckig, wabenartig, polygonal und/oder eine über die Außenseite verlaufene, beispielsweise im Wesentlichen geschwungene, stufige und/oder geradlinige Form. Die unterschiedlichen Tiefen können sich beispielsweise durch den Querschnitt der Gehäusehälften 300A, 300B ergeben.

Die wenigstens eine Vertiefung 360, insbesondere die Vertiefungsrippe, und/oder die dadurch gebildeten Taschen 360 und/oder Hohlräume 360, können in einem Bereich zwischen den Schwalbenschwanz-Führungen, insbesondere zwischen den Leisten 310A-B und 310'A-B sowie 320A-B und 320'A-B der Schwalbenschwanz-Führungen, angeordnet sein, beispielsweise auf einer Außenseite der Gehäusehälfte 300A, 300B. Eine Tiefe der Vertiefung 360, insbesondere die Vertiefungsrippe 360, und/oder die dadurch gebildeten Taschen 360 und/oder Hohlräume 360, kann kleiner sein als eine Dicke der Gehäusehälfte 300A, 300B. Mit anderen Worten, die Taschen 360 und/oder Hohlräume 360 erstrecken sich nicht komplett durch die Gehäusehälfte 300A, 300B, sind also beispielsweise als "Blindloch" ausgestaltet.

Wenigstens eine der Gehäusehälften 300A, 400B kann einen Querschnitt aufweisen, der sich in Längsrichtung der wenigstens einen Gehäusehälfte 300A, 300B ändert. Diese Querschnittsänderung kann beispielsweise die Stabilität der Gehäusehälfte 300A, 300B und/oder der Verbindungsmuffe 300 als solche erhöhen, da z.B. mittig mehr Material vorhanden ist. Die wenigstens eine Gehäusehälfte 300A, 300B kann, beispielsweise mittig, eine radial nach außen ragende Erweiterung 370 aufweisen, z.B. eine Erhebung 370. Der Querschnitt der wenigstens einen Gehäusehälfte 300A, 300B kann sich von der nach außen ragenden Erweiterung 370 ausgehend, also z.B. mittig 311, zu Endbereichen der wenigstens einen Gehäusehälfte 300A, 300B ändern, insbesondere abnehmen, sich vorzugsweise verjüngen bzw. verkleinern, wobei insbesondere der Querschnitt wenigstens abschnittsweise keilförmig ausgestaltet ist. Beispielsweise kann eine Höhe der wenigstens einen Gehäusehälfte 300A, 300B von der nach außen ragenden Erweiterung 370 zu Endbereichen der wenigstens einen Gehäusehälfte 300A, 300B, beispielsweise bis zu den Mikrorohranlageabschnitten oder den Endbereichen abnehmen, insbesondere unter einem Winkel von in etwa 2°. Die Querschnittsänderung der Gehäusehälften 300A, 300B ist in den Figuren 3B und 4B erkennbar.

Eine Breite B der wenigstens einen Gehäusehälfte, insbesondere in einer Richtung quer zur Längsrichtung der Gehäusehälfte 300A, 300B (s. z.B. Fig. 3D und 4D), kann von der nach außen ragenden Erweiterung 370 zu Endbereichen der wenigstens einen Gehäusehälfte 300A, 300B und/oder über eine gesamte Länge der wenigstens einen Gehäusehälfte 300A, 300B, im Wesentlichen konstant sein. Beispielsweise kann die Erweiterung 370 auch entsprechend ausgestaltet sein, dass diese die gleiche Breite B aufweist.

Fig. 5A-D zeigen eine Verbindungsklammer 400, insbesondere eine oder mehrere Schubklemmhülsen, insbesondere zum Verspannen von Gehäusehälften 300A, 300B für eine Verbindungsmuffe 300, insbesondere eine Halbschalenverbindungsmuffe, insbesondere gemäß einem oder mehreren der hierin beschriebenen Erfindungsaspekte und/oder Ausführungsbeispiele. Die Verbindungsklammer 400, insbesondere Schubklemmhülse, kann eine Ausnehmung 410, insbesondere eine Nut 410, aufweisen, beispielsweise an einer der Verbindungsmuffe, insbesondere einer oder mehrerer der Leisten 310A-B, 310'A-B, 320A-B, 320'A-B, zuzuwendenden Seite. Die Ausnehmung 410 kann beispielsweise formkomplementär zu der einen oder der mehreren Leisten 310A-B, 310'A-B, 320A-B, 320'AB der Verbindungsmuffe 300 ausgestaltet sein, z.B. im Wesentlichen keilförmig, insbesondere schwalbenschwanzförmig, um beispielsweise damit eingreifen zu können bzw. aufgeschoben werden zu können, um die Gehäusehälften 300A, 300B der Verbindungsmuffe 300 zu verspannen, insbesondere aneinander zu befestigen, vorzugsweise form- und/oder kraftschlüssig. Wie in Fig. 5A-D beispielsweise dargestellt, kann die Verbindungsklammer 400, insbesondere die Schubklemmhülse, einen im Wesentlichen länglichen Klemmkörper 420 umfassen, wobei der im Wesentlichen länglichen Klemmkörper 420 eine Breite aufweisen kann, die sich, insbesondere in dessen Längsrichtung, ändert. Wie in Fig. 5A dargestellt, kann sich die Breite B1 der Verbindungsklammer 400 von einer Seite der Verbindungsklammer 400 zu der gegenüberliegenden Seite der Verbindungsklammer 400 auf eine Breite B2 ändern, beispielsweise verkleinern, d.h. es kann gelten B2<B1. Der umgekehrte Fall, d.h. B2>B1 ist jedoch ebenfalls denkbar. Beispielsweise kann der im Wesentlichen längliche Klemmkörper 420, insbesondere in dessen Längsrichtung, im Wesentlichen keilförmig ausgestaltet sein. Eine beispielhafte Länge der Verbindungsklammer kann in einem Bereich von in etwa 10 cm bis in etwa 14cm, vorzugsweise in etwa 12cm liegen. Die Breite des im Wesentlichen längliche Klemmkörpers kann, insbesondere in dessen Längsrichtung, unter einem Winkel von weniger als in etwa 3°, insbesondere weniger als in etwa 2°, vorzugsweise 1,5° abnehmen. Beispielhafte Breiten der Verbindungsklammer 400 können sich aus den Winkelbereichen ergeben.

Die Verbindungsklammer 400, insbesondere die Schubklemmhülse, kann eine gewölbte, gekrümmte, rundliche, und/oder teilzylinderartige Oberfläche 430, insbesondere eine Außenfläche 430 aufweisen, beispielsweise an einer Außenseite, die im Querschnitt wenigstens teilzylinderförmig und/oder teilkreisförmig ausgestaltet sein kann, z.B. ein Kreissegment definieren, z.B. halbkreisförmig oder weniger als halbkreisförmig.

Der im Wesentlichen längliche Klemmkörper 420 kann, insbesondere auf einer Außenseite 430, wenigstens einen Vorsprung 440, insbesondere wenigstens eine Rippe 440 aufweisen, insbesondere zum Anbringen der Verbindungsklammer 400, insbesondere der Schubklemmhülse, an den Gehäusehälften 300A, 300B. Der wenigstens eine Vorsprung 440, insbesondere die wenigstens eine Rippe 440, kann im Wesentlichen länglich ausgestaltet sein und/oder im Wesentlichen quer zu einer Längsrichtung des im Wesentlichen länglichen Klemmkörpers 420 verlaufen, insbesondere im Wesentlichen über dessen gesamte Außenseite 430, wie z.B. in Fig. 5D gezeigt. Der im Wesentlichen länglichen Klemmkörper 420 kann auch eine Mehrzahl von Vorsprüngen 440, insbesondere eine Mehrzahl von Rippen 440, aufweisen, die insbesondere in gleichmäßigen Abständen und/oder parallel zueinander auf dessen Außenseite 430 angeordnet sind, wobei die Vorsprünge 440 unterschiedliche Längen aufweisen, beispielsweise bedingt durch die verändernde Breite (B1/B2) und/oder die Keilform der Verbindungsklammer 400. Die Rippen 440 können zusätzlichen Grip bereitstellten und die Montage der Verbindungsmuffe 300 erleichtern. Beispielsweise kann über die Rippen 440 eine erhöhte Kraft zum Verspannen der Verbindungsmuffe 300 bereitgestellt werden und ein Abrutschen bei der Montage verhindert und/oder reduziert werden. Auf der Außenseite 430 kann, z.B. durch die Rippen und/oder separat davon, eine Richtungsangabe in Form eines Pfeils 450 ausgebildet sein. Dies kann die Montage zusätzlich erleichtern, da eine Montage- und/oder Verspann-Richtung der Verbindungsklammer 400, z.B. auf der Verbindungsmuffe 300 und/oder 10A-B, 310'A-B, 320A-B, 320'A-B dadurch beispielsweise sofort ersichtlich/nachvollziehbar sein kann.

Fig. 6A-B zeigen eine Verbindungsmuffe 300 bzw. eine Verbindungsmuffen-Baugruppe 300, insbesondere ein Reparatur-Kit 300, für ein, insbesondere defektes, Mikrorohr, insbesondere zum Verbinden von Mikrorohrendstücken 1, 1' eines defekten, insbesondere unterbrochenen, Mikrorohrs oder zweier verschiedener Mikrorohre. Die Verbindungsmuffen-Baugruppe 300 kann auch als Reparatur-Kit 300 bezeichnet werden. Im Unterschied zu einer Verbindungsmuffe 300, kann eine Verbindungsmuffen-Baugruppe 300 die Verbindungsmuffe in montiertem Zustand bezeichnen, beispielsweise wenn der Mikrorohreinsatz 100 und/oder das Dichtmittel 200 (sowie das, insbesondere defekte, Mikrorohr und/oder die Mikrorohrendstücke 1, 1') darin eingeschlossen sind. Mittels der Verbindungsmuffe 300 und/oder der Verbindungsmuffen-Baugruppe 300 können, insbesondere defekte, Mikrorohre repariert werden. Die Verbindungsmuffen-Baugruppe 300 kann eine Verbindungsmuffe mit zwei Gehäusehälften 300A, 300B umfassen, die mittels einer oder mehrere Verbindungsklammern 400, insbesondere einer oder mehreren Schubklemmhülsen 400, vorliegend beispielsweise vier, verspannt werden. In der Verbindungsmuffen-Baugruppe 300 ist ein Mikrorohreinsatz 100 und/oder
ein Dichtmittel 200 einschließbar bzw. eingeschlossen, insbesondere kraftschlüssig und/oder formschlüssig. Der Einfachheit halber sin die Mikroohrendstücke 1, 1' weggelassen worden.

Die Verbindungsmuffen-Baugruppe 300 kann auch als Reparatur-Kit 300 bezeichnet werden, da dadurch, insbesondere defekte, Mikrorohre repariert werden können. Beispielsweise können strukturell und/oder funktionell beeinträchtigte, beschädigte und/oder kaputte Mikrorohre, die z.B. physische Beeinträchtigungen wie Risse, Löcher, Brüche, und/oder Verformungen, Unterbrechungen und/oder Materialfehler aufweisen, mittels der Verbindungsmuffen-Baugruppe 300 repariert werden, beispielsweise also deren Struktur und/oder Funktion wiederhergestellt werden. Die Verbindungsmuffen-Baugruppe 300 schützt auch vor Verunreinigungen und/oder anderen Einflüssen, die beispielsweise zu verschlechterten Eigenschaften der Mikrorohre und/oder der darin anordenbaren Glasfasern führen können, wie z.B. optischen und/oder strukturellen Eigenschaften, die zu einer verschlechterten Funktionalität, Datenverlusten und/oder einer gestörten Signalübertragung bzw. verminderter Leistung führen können.

Bei der Verbindungsmuffen-Baugruppe 300, insbesondere dem Reparatur-Kit 300, kann der Mikrorohreinsatz 100 zwischen Mikrorohrendstücken 1, 1' des, insbesondere defekten, Mikrorohrs, und/oder darauf/darum, angeordnet sein. Beispielsweise kann der Mikrorohreinsatz 100 durch die wenigstens eine Sollbruchstelle 104 an den Abstand zwischen den Mikrorohrendstücken 1, 1' angepasst worden sein. Das Dichtmittel 200 kann den Mikrorohreinsatz 100 und/oder das, insbesondere defekte, Mikrorohr, insbesondere im Wesentlichen vollständig, umhüllen, insbesondere abdichten. Der wenigstens eine Vorsprung 206, insbesondere der Mitnehmervorsprung 206, des Dichtelements 200, kann, in einem zusammengebauten Zustand, an einem der Auflagevorsprünge 202B des halbschalenförmigen Abschnitts 202 anliegen. Diese können insbesondere kraftschlüssig miteinander verbunden sein, beispielsweise durch einen Anpressdruck der Verbindungsmuffe 300, insbesondere der beiden Gehäusehälften 303A, 303B.

Wie in Fig 6B dargestellt, kann die Form der Mikrorohranlageabschnitte 340A, 340B auch von einer Halbzylinderform bzw. Halbkreisform abweichen, z.B. weniger oder mehr als halbzylinderförmig sein, beispielsweise im Querschnitt weniger oder mehr als ein Halbkreis definieren, z.B. ein Kreissegment. Mit anderen Worten, einer oder beide der hierin beschriebenen Mikrorohranlageabschnitte 340A, 340B können eine Öffnung definieren, beispielsweise eine Mikrorohraufnahmeöffnung definieren und/oder ausbilden, die nicht vollständig kreisförmig bzw. halbkreisförmig ist. Jedoch sind halbreisförmige/halbzylinderförmige Mikrorohranlageabschnitte ebenfalls denkbar. Beispielsweise können die Mikrorohranlageabschnitte 340A, 340B auch an wenigstens einer (oder auch beiden) der Gehäusehälften und/oder an einer Seite der Gehäusehälfte entfallen (vgl. z.B. Fig. 3A-3D, Fig. 4A-4D, Fig. 6A).

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste:

- 1, 1': Mikrorohr bzw. Mikrorohrendstück
- 2: Glasfaser
- 100: Mikrorohreinsatz
- 102: Einsatzkörper
- 102A, 102B: Halbschale
- 104: Sollbruchstelle
- 106: Steg
- 108: Aussparung
- 200: Dichtmittel
- 202: Halbschalenförmiger Abschnitt
- 202A, 202B: Auflagevorsprünge
- 202A', 202B': Endbereiche der Auflagevorsprünge
- 204: Mikrorohr-Umhüllungsabschnitt
- 206: Mitnehmervorsprung
- 210: Strukturierte Oberfläche
- 300: Verbindungsmuffe
- 300A, 300B: Gehäusehälften
- 310A-B, 320A-B: Leisten
- 310'A-B, 320'A-B: Leisten
- 311: Mitte
- 330: Durchgangsöffnung
- 330A, 330B: Montagefläche
- 330C: Nut
- 340A, 340B: Mikrorohranlageabschnitte
- 350: Arretierelement
- 351: Befestigungsabsatz
- 360: Vertiefungen
- 370: Erweiterung
- 400: Verbindungsklammer
- 410: Ausnehmung
- 420: Klemmkörper
- 430: Oberfläche
- 440: Vorsprung
- 450: Pfeilform
- dA: Durchmesser
- w: Wandstärke
- B, B', B1, B2: Breite
- D, D', d: Dicke
- A1, A2: Abstand
- h1, h2: Höhe
- L: Länge

## Patentansprüche

1. Mikrorohreinsatz zum Verbinden von Mikrorohrendstücken eines defekten, insbesondere unterbrochenen, Mikrorohrs oder zweier verschiedener Mikrorohre, umfassend:
einen im Wesentlichen länglichen Einsatzkörper zur Anordnung zwischen den Mikrorohrendstücken,
**dadurch gekennzeichnet, dass** der im Wesentlichen längliche Einsatzkörper
wenigstens eine Sollbruchstelle zum definierten Abtrennen eines Abschnitts des Einsatzkörpers umfasst, die eingerichtet ist, eine Länge des Einsatzkörpers an einen Abstand zwischen den Mikrorohrendstücken anzupassen.

2. Mikrorohreinsatz nach Anspruch 1, wobei der im Wesentlichen längliche Einsatzkörper rohrförmig, insbesondere aus zwei Halbschalen, ausgebildet ist, wobei insbesondere die zwei Halbschalen eingerichtet sind, zwischen den Mikrorohrendstücken verlaufende Glasfasern, einzuschließen, insbesondere zu umhüllen, insbesondere formschlüssig und/oder kraftschlüssig und/oder wobei der im Wesentlichen längliche Einsatzkörper aus Polyethylen hergestellt ist und/oder wobei der Mikrorohreinsatz eine Mehrzahl von Sollbruchstellen umfasst, die gleichmäßig beabstandet sind, insbesondere mit einem Abstand von in etwa 10 mm bis 30 mm, insbesondere in etwa 15 mm bis 25 mm, vorzugsweise in etwa 18 mm bis 22 mm, am bevorzugtesten in etwa 20 mm.

3. Dichtmittel für eine Verbindungsmuffe, insbesondere eine Halbschalenverbindungsmuffe, zum Abdichten eines, insbesondere defekten, Mikrorohrs, insbesondere von Mikrorohrendstücken eines defekten, insbesondere unterbrochenen, Mikrorohrs oder zweier verschiedener Mikrorohre, und/oder eines Mikrorohreinsatzes insbesondere nach einem der Ansprüche 1 oder 2, umfassend:
einen halbschalenförmigen Abschnitt, an dessen Enden, insbesondere dessen Umfangsenden, sich Auflagevorsprünge erstrecken, insbesondere zum Eingriff mit einer Gehäusehälfte der Verbindungsmuffe,
**gekennzeichnet durch**
einen, insbesondere im Wesentlichen geradlinigen, Mikrorohr-Umhüllungsabschnitt, der an dem halbschalenförmigen Abschnitt, insbesondere an einem der Auflagevorsprünge, anschließt.

4. Dichtmittel nach Anspruch 3, wobei das Dichtmittel einen im Wesentlichen J-förmigen Querschnitt aufweist und/oder wobei sich die Auflagevorsprünge, insbesondere in Längsrichtung des, insbesondere defekten, Mikrorohrs, im Wesentlichen über die gesamte Länge des Dichtelements und/oder der Verbindungsmuffe erstrecken, wobei insbesondere eine Dicke der Auflagevorsprünge, insbesondre in der Längsrichtung des, insbesondere defekten, Mikrorohrs wenigstens abschnittsweise variiert und/oder wobei eine Dicke der Auflagevorsprünge in Endbereichen des Dichtmittels größer ist, als eine Dicke der Auflagevorsprünge zwischen den Endbereichen des Dichtmittels, wobei insbesondere eine Dicke der Auflagevorsprünge in den Endbereichen des Dichtmittels in etwa wenigstens doppelt so groß oder in etwa dreimal so groß ist, wie eine Dicke der Auflagevorsprünge zwischen den Endbereichen.

5. Dichtmittel nach einem der Ansprüche 3 oder 4, wobei an einem Ende des, insbesondere im Wesentlichen geradlinigen, Mikrorohr-Umhüllungsabschnitts wenigstens ein Vorsprung, insbesondere ein Mitnehmervorsprung, ausgebildet ist, insbesondere zum Eingriff, insbesondere zum Einhaken, mit einer anderen Gehäusehälfte der Verbindungsmuffe und/oder wobei eine Länge des, insbesondere im Wesentlichen geradlinigen, Mikrorohr-Umhüllungsabschnitts auf einen Umfang, insbesondere eine Umfangslänge, des, insbesondere defekten, Mikrorohrs, abgestimmt ist, insbesondere um, in einem verbauten Zustand, einen Eingriff zwischen dem wenigstens einen Vorsprung, insbesondere dem Mitnehmervorsprung, des, insbesondere im Wesentlichen geradlinigen, Mikrorohr-Umhüllungsabschnitts, mit einem anderen der Auflagevorsprünge des halbschalenförmigen Abschnitts, zu ermöglichen und/oder wobei
- der halbschalenförmige Abschnitt; und/oder
- der, insbesondere im Wesentlichen geradlinige, Mikrorohr-Umhüllungsabschnitt, eine strukturierte Oberfläche, insbesondere auf einer dem, insbesondere defekten, Mikrorohr zugewandten und/oder zuzuwendenden Seite, aufweisen, wobei insbesondere die strukturierte Oberfläche wenigstens eine Erhebung, insbesondere wenigstens eine Rille oder Rippe, vorzugsweise eine Arretier-Rippe, aufweist, die eingerichtet ist, an wenigstens einem der Mikrorohrendstücke des, insbesondere defekten, Mikrorohrs, anzugreifen, insbesondere um eine Position des Dichtmittels zu fixieren und/oder wobei das Dichtmittel eingerichtet ist, das, insbesondere defekte, Mikrorohr und/oder die Mikrorohrendstücke, wenigstens abschnittsweise im Wesentlichen vollständig zu umhüllen, insbesondere umfänglich und/oder wobei eine Länge des Dichtmittels, insbesondere in Längsrichtung des, insbesondere defekten, Mikrorohrs, im Wesentlichen einer Länge der Verbindungsmuffe entspricht und/oder wobei das Dichtmittel aus einem Kunststoff, insbesondere einem elastisch verformbaren Kunststoff, insbesondere einem Elastomer-Material hergestellt ist und/oder wobei das Dichtmittel einstückig ausgebildet ist und/oder wobei das Dichtmittel eingerichtet ist, das, insbesondere defekte, Mikrorohr gas- und/oder wasserdicht abzudichten.

6. Verbindungsmuffe, insbesondere Halbschalenverbindungsmuffe, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend:
zwei Gehäusehälften, insbesondere Halbschalenhülsen, die ausgestaltet sind ein Dichtmittel, insbesondere nach einem der Ansprüche 3-5, und/oder einen Mikrorohreinsatz, insbesondere nach einem der Ansprüche 1 oder 2, aufzunehmen,
wobei die Gehäusehälften mittels einer oder mehreren Verbindungsklammern, insbesondere Schubklemmhülsen, insbesondere nach einem der Ansprüche 13-16, insbesondere über Schwalbenschwanz-Führungen, gegeneinander verspannbar sind;
**dadurch gekennzeichnet, dass**
wenigstens eine der Gehäusehälften wenigstens ein Arretierelement umfasst, das eingerichtet ist, an dem, insbesondere defekten, Mikrorohr anzugreifen, insbesondere damit zu verkeilen, insbesondere zu verkrallen, insbesondere zum Sichern einer Position der Verbindungsmuffe an dem, insbesondere defekten, Mikrorohr.

7. Verbindungsmuffe nach Anspruch 6, wobei das wenigstens eine Arretierelement im Wesentlichen keilförmig ausgebildet ist, wobei insbesondere das wenigstens eine Arretierelement auf einer, dem, insbesondere defekten, Mikrorohr zugewandten und/oder zuzuwendenden Seite, insbesondere einer Innenseite der wenigstens einen Gehäusehälfte, angeordnet ist, wobei insbesondere eine Form des wenigstens einen Arretierelements einer Innenform der wenigstens einen Gehäusehälfte entspricht und/oder wobei das wenigstens eine Arretierelement im Wesentlichen halbschalenförmig ausgestaltet ist und/oder wobei das wenigstens eine Arretierelement in einem halbschalenförmigen Mikrorohranlageabschnitt der wenigstens einen Gehäusehälfte angeordnet ist, insbesondere darin eingebettet ist, wobei der halbschalenförmige Mikrorohranlageabschnitt durch die wenigstens eine Gehäusehälfte ausgebildet ist, wobei der halbschalenförmige Mikrorohranlageabschnitt insbesondere einen Aufnahmebereich für das Dichtmittel begrenzt, und insbesondere dessen Innenquerschnitt geringer ist als die Außenabmessung des, insbesondere defekten, Mikrorohrs und/oder wobei das Arretierelement aus einem Metall, insbesondere einem nicht-rostenden Metall, vorzugsweise Edelstahl, hergestellt ist.

8. Verbindungsmuffe, insbesondere Halbschalenverbindungsmuffe, insbesondere nach einem der Ansprüche 6 oder 7, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend:
zwei Gehäusehälften, insbesondere Halbschalenhülsen, die ausgestaltet sind ein Dichtmittel, insbesondere nach einem der Ansprüche 3-5 und/oder einen Mikrorohreinsatz, insbesondere nach einem der Ansprüche 1 oder 2, aufzunehmen,
wobei die Gehäusehälften mittels einer oder mehreren Verbindungsklammern, insbesondere Schubklemmhülsen, insbesondere nach einem der Ansprüche 13-16, über Schwalbenschwanz-Führungen gegeneinander verspannbar sind;
**dadurch gekennzeichnet, dass**
ein Winkel, insbesondere ein Keilwinkel, der Schwalbenschwanz-Führungen weniger als in etwa 3°, insbesondere weniger als in etwa 2°, vorzugsweise 1,5° beträgt.

9. Verbindungsmuffe, insbesondere Halbschalenverbindungsmuffe, insbesondere nach einem der Ansprüche 6-8, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend:
zwei Gehäusehälften, insbesondere Halbschalenhülsen, die ausgestaltet sind ein Dichtmittel, insbesondere nach einem der Ansprüche 3-5 und/oder einen Mikrorohreinsatz, insbesondere nach einem der Ansprüche 1 oder 2, aufzunehmen,
wobei die Gehäusehälften mittels einer oder mehreren Verbindungsklammern, insbesondere Schubklemmhülsen, insbesondere nach einem der Ansprüche 13-16, insbesondere über Schwalbenschwanz-Führungen, gegeneinander verspannbar sind;
**dadurch gekennzeichnet, dass**
wenigstens eine der Gehäusehälften, insbesondere der Halbschalenhülsen, auf einer Außenseite der wenigstens einen Gehäusehälfte, wenigstens eine Vertiefung, insbesondere eine Vertiefungsrippe, aufweist.

10. Verbindungsmuffe nach Anspruch 9, wobei die wenigstens eine Vertiefung in einem Bereich zwischen den Schwalbenschwanz-Führungen, insbesondere zwischen den Leisten der Schwalbenschwanz-Führungen, angeordnet ist, wobei insbesondere eine Tiefe der Vertiefung kleiner ist als eine Dicke der Gehäusehälfte und/oder wobei wenigstens eine der Gehäusehälften, insbesondere der Halbschalenhülsen, eine Mehrzahl von Vertiefungen, insbesondere Vertiefungsrippen, aufweist, die insbesondere eine Tasche und/oder einen Hohlraum bilden, die insbesondere paarweise angeordnet sind, wobei insbesondere die Mehrzahl von Vertiefungen im Wesentlichen rechteckig ausgestaltet sind und/oder unterschiedliche Tiefen aufweisen.

11. Verbindungsmuffe, insbesondere Halbschalenverbindungsmuffe, insbesondere nach einem der Ansprüche 6-10, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend:
zwei Gehäusehälften, insbesondere Halbschalenhülsen, die ausgestaltet sind ein Dichtmittel, insbesondere nach einem der Ansprüche 3-5 und/oder einen Mikrorohreinsatz, insbesondere nach einem der Ansprüche 1 oder 2, aufzunehmen,
wobei die Gehäusehälften mittels einer oder mehrerer Verbindungsklammern, insbesondere Schubklemmhülsen, insbesondere nach einem der Ansprüche 13-16, insbesondere über Schwalbenschwanz-Führungen, gegeneinander verspannbar sind;
**dadurch gekennzeichnet, dass**
wenigstens eine der Gehäusehälften einen Querschnitt aufweist, der sich in Längsrichtung der wenigstens einen Gehäusehälfte ändert.

12. Verbindungsmuffe nach Anspruch 11, wobei die wenigstens eine Gehäusehälfte mittig eine radial nach außen ragende Erweiterung aufweist, wobei sich der Querschnitt der wenigstens einen Gehäusehälfte von der nach außen ragenden Erweiterung zu Endbereichen der wenigstens einen Gehäusehälfte ändert, insbesondere abnimmt, wobei insbesondere der Querschnitt wenigstens abschnittsweise keilförmig ausgestaltet ist und/oder wobei eine Höhe der wenigstens einen Gehäusehälfte von der nach außen ragenden Erweiterung zu Endbereichen der wenigstens einen Gehäusehälfte abnimmt, insbesondere unter einem Winkel von in etwa 2° und/oder wobei eine Breite der wenigstens einen Gehäusehälfte von der nach außen ragenden Erweiterung zu Endbereichen der wenigstens einen Gehäusehälfte und/oder über eine gesamte Länge der wenigstens einen Gehäusehälfte, im Wesentlichen konstant ist.

13. Verbindungsklammer, insbesondere Schubklemmhülse, insbesondere zum Verspannen von Gehäusehälften einer Verbindungsmuffe, insbesondere Halbschalenverbindungsmuffe, insbesondere nach einem der Ansprüche 6-12, umfassend:
einen im Wesentlichen länglichen Klemmkörper;
**dadurch gekennzeichnet, dass**
der im Wesentlichen länglichen Klemmkörper eine Breite aufweist, die sich, insbesondere in dessen Längsrichtung, ändert.

14. Verbindungsklammer, insbesondere Schubklemmhülse, nach Anspruch 13, wobei der im Wesentlichen längliche Klemmkörper, insbesondere in dessen Längsrichtung, im Wesentlichen keilförmig ausgestaltet ist und/oder wobei die Breite des im Wesentlichen längliche Klemmkörpers, insbesondere in dessen Längsrichtung, unter einem Winkel von weniger als in etwa 3°, insbesondere weniger als in etwa 2°, vorzugsweise 1,5° abnimmt.

15. Verbindungsklammer, insbesondere Schubklemmhülse, insbesondere nach einem der Ansprüche 13 oder 14, insbesondere zum Verspannen von Gehäusehälften einer Verbindungsmuffe, insbesondere Halbschalenverbindungsmuffe, insbesondere nach einem der Ansprüche 6-12, umfassend:
einen im Wesentlichen länglichen Klemmkörper;
**dadurch gekennzeichnet, dass**
der im Wesentlichen längliche Klemmkörper, insbesondere auf einer Außenseite, wenigstens einen Vorsprung, insbesondere wenigstens eine Rippe aufweist, insbesondere zum Anbringen der Verbindungsklammer, insbesondere der Schubklemmhülse, an den Gehäusehälften.

16. Verbindungsklammer, insbesondere Schubklemmhülse, nach Anspruch 15, wobei der wenigstens eine Vorsprung, insbesondere die wenigstens eine Rippe, im Wesentlichen länglich ausgestaltet ist und/oder im Wesentlichen quer zu einer Längsrichtung des im Wesentlichen länglichen Klemmkörpers verläuft, insbesondere im Wesentlichen über dessen gesamte Außenseite und/oder wobei der im Wesentlichen länglichen Klemmkörper eine Mehrzahl von Vorsprüngen, insbesondere eine Mehrzahl von Rippen, aufweist, die insbesondere in gleichmäßigen Abständen und/oder parallel zueinander auf dessen Außenseite angeordnet sind, wobei die Vorsprünge unterschiedliche Längen aufweisen.

17. Verbindungsmuffen-Baugruppe, insbesondere Reparatur-Kit, für ein, insbesondere defektes, Mikrorohr, insbesondere zum Verbinden von Mikrorohrendstücken eines defekten, insbesondere unterbrochenen, Mikrorohrs oder zweier verschiedener Mikrorohre, umfassend:
eine Verbindungsmuffe mit zwei Gehäusehälften nach
- einem der Ansprüche 6 oder 7; und/oder
- Anspruch 8; und/oder
- einem der Ansprüche 9 oder 10; und/oder
- einem der Ansprüche 11 oder 12, die
mittels einer oder mehrere Verbindungsklammern, insbesondere Schubklemmhülsen, nach
- einem der Ansprüche 13 oder 14; und/oder
- einem der Ansprüche 15 oder 16, verspannbar sind;
einen Mikrorohreinsatz nach einem der Ansprüche 1 oder 2, und/oder
ein Dichtmittel nach einem der Ansprüche 3-5, die zwischen den Gehäusehälften einschließbar sind, insbesondere kraftschlüssig und/oder formschlüssig.

18. Verbindungsmuffen-Baugruppe nach Anspruch 17, wobei der Mikrorohreinsatz zwischen Mikrorohrendstücken des, insbesondere defekten, Mikrorohrs, angeordnet ist und das Dichtmittel den Mikrorohreinsatz und/oder das, insbesondere defekte, Mikrorohr, insbesondere im Wesentlichen vollständig, umhüllt, insbesondere abdichtet und/oder wobei der wenigstens eine Vorsprung, insbesondere der Mitnehmervorsprung, des Dichtelements, in einem zusammengebauten Zustand, an einem der Auflagevorsprünge des halbschalenförmigen Abschnitts anliegt, und diese insbesondere kraftschlüssig miteinander verbunden sind.

19. Verfahren zur Reparatur eines, insbesondere defekten, Mikrorohrs und/oder zum Verbinden von Mikrorohrendstücken eines defekten, insbesondere unterbrochenen, Mikrorohrs oder zweier verschiedener Mikrorohre, mittels
- einem Mikrorohreinsatz nach einem der Ansprüche 1 oder 2; und/oder
- einem Dichtmittel nach einem der Ansprüche 3-5; und/oder
- einer Verbindungsmuffe nach einem der Ansprüche 6-12; und/oder
- einer oder mehrerer Verbindungsklammern, insbesondere Schubklemmhülsen, nach einem der Ansprüche 13-16; und/oder
- einer Verbindungsmuffen-Baugruppe nach einem der Ansprüche 17 oder 18.

20. Verwendung eines Mikrorohreinsatzes nach einem der Ansprüche 1 oder 2, eines Dichtmittels nach einem der Ansprüche 3-5, einer Verbindungsmuffe nach einem der Ansprüche 6-12, einer oder mehrere Verbindungsklammern, insbesondere Schubklemmhülsen, nach einem der Ansprüche 13-16, einer Verbindungsmuffen-Baugruppe nach einem der Ansprüche 17 oder 18 und/oder einem Verfahren nach Anspruch 19,
- zur Reparatur eines, insbesondere defekten, Mikrorohrs, und/oder
- zum Verbinden von Mikrorohrendstücken eines defekten, insbesondere unterbrochenen, Mikrorohrs oder zweier verschiedener Mikrorohre,
während eines laufenden Netzbetriebs.
